# EUROPEAN PATENT APPLICATION

(11) **EP 3 944 180 A1**
(43) Date of publication of application: **26.01.2022**
(21) Application number: 19920055.1
(22) Date of filing: 18.03.2019
(51) Int. Cl.: G06Q 50/10

(54) **INFORMATION PROCESSING DEVICE, SERVER DEVICE, INFORMATION PROCESSING METHOD, AND RECORDING MEDIUM**

(71) Applicant: NEC Corporation, 108-8001 Tokyo (JP)
(72) Inventor: NAKAHIRA, Ritsuko, Tokyo 108-8001 (JP)
(74) Representative: Betten & Resch
(86) International application number: PCT/JP2019/011256
(87) International publication number: WO 2020/188714

(57) **Abstract**

An information processing apparatus related to the present example embodiment comprising: an acquisition unit for acquiring visitor registration information of a person permitted to enter a management area by a first biometrics authentication; and a control unit for performing a second biometrics authentication for a predetermined transaction in the management area using the visitor registration information.

## Description

### [Technical field]

The present invention relates to an information processing apparatus, a server device, an information processing method, and a storage medium.

### [Background Art]

Patent Literature 1 discloses an information processing apparatus which performs face authentication of face information of a settlement person extracted from an acquired image and face information of a store visitor stored in a store visitor database and performs settlement process using registration information of a member corresponding to face information of a store visitor whose authentication is successful.

### [Citation List]

### [Patent Literature]

PTL 1: Japanese Patent Application Laid-Open No. 2016-126749

### [Summary of Invention]

### [Technical Problem]

However, the store visitor database in Patent Literature 1 is related to a face image of a person in a store which can be freely entered, and can include information of many and unspecified persons. For this reason, in order to make a settlement with a store visitor safely, only authentication using the store visitor database is not sufficient, authentication using a medium such as a card is required, and convenience is impaired.

Accordingly, an object of the present invention is to provide an information processing apparatus, a server device, an information processing method, and a storage medium which can improve convenience for a user.

### [Solution to Problem]

According to one aspect of the present invention, there is provided an information processing apparatus comprising: an acquisition unit for acquiring visitor registration information of a person permitted to enter a management area by a first biometrics authentication; and a control unit for performing a second biometrics authentication for a predetermined transaction in the management area using the visitor registration information.

According to another aspect of the present invention, there is provided a server device comprising: an acquisition unit for acquiring visitor registration information of a person permitted to enter a management area by a first biometrics authentication; and a distribution unit for distributing the visitor registration information to an information processing apparatus for performing a second biometrics authentication for a predetermined transaction in the management area by using the visitor registration information.

According to another aspect of the present invention, there is provided an information processing method comprising: acquiring visitor registration information of a person permitted to enter a management area by a first biometrics authentication; and performing a second biometrics authentication for a predetermined transaction in the management area using the visitor registration information.

According to yet another example aspect of the disclosure, provided is a storage medium storing a program that causes a computer to perform: acquiring visitor registration information of a person permitted to enter a management area by a first biometrics authentication; and
performing a second biometrics authentication for a predetermined transaction in the management area using the visitor registration information.

### [Advantageous Effects of Invention]

According to the present invention, it is possible to provide an information processing apparatus, a server device, an information processing method, and a recording medium which can improve the convenience of a user.

### [Brief Description of Drawings]

[Fig. 1] Fig. 1 is a schematic diagram illustrating an example of the overall configuration of a biometrics authentication system in a first example embodiment.
[Fig. 2] FIG. 2 is a block diagram illustrating an example of a hardware configuration of a management server in the first example embodiment.
[Fig. 3] FIG. 3 is a block diagram illustrating an example of a hardware configuration of a check-in terminal in the first example embodiment.
[Fig. 4] FIG. 4 is a block diagram illustrating an example of a hardware configuration of a security inspection apparatus in the first example embodiment.
[Fig. 5] FIG. 5 is a block diagram illustrating an example of a hardware configuration of an automated gate apparatus in the first example embodiment.
[Fig. 6] FIG. 6 is a block diagram illustrating an example of a hardware configuration of a POS terminal in the first example embodiment.
[Fig. 7] FIG. 7 is a block diagram illustrating an example of a hardware configuration of a reception terminal in the first example embodiment.
[Fig. 8] FIG. 8 is a block diagram illustrating an example of a hardware configuration of a boarding gate apparatus in the first example embodiment.
[Fig. 9] FIG. 9 is a sequence chart illustrating an example of the processing of the check-in terminal and the management server in the first example embodiment.
[Fig. 10] FIG. 10 is a diagram illustrating an example of information stored in a central DB in the first example embodiment.
[Fig. 11] FIG. 11 is a diagram illustrating an example of information stored in a passenger DB in the first example embodiment.
[Fig. 12] FIG. 12 is a sequence chart illustrating an example of processing by the security inspection apparatus and the management server in the first example embodiment.
[Fig. 13] FIG. 13 is a diagram illustrating an example of a watch list stored in the security inspection apparatus in the first example embodiment.
[Fig. 14A] FIG. 14A is a diagram illustrating an example of an error display screen displayed by the security inspection apparatus in the first example embodiment.
[Fig. 14B] FIG. 14B is a diagram illustrating an example of an error display screen displayed by the security inspection apparatus in the first example embodiment.
[Fig. 15] FIG. 15 is a sequence chart illustrating an example of processing of the automated gate apparatus and the management server in the first example embodiment.
[Fig. 16] FIG. 16 is a sequence chart illustrating an example of processing of the POS terminal and the management server in the first example embodiment.
[Fig. 17] FIG. 17 is a diagram illustrating an example of a watch list stored in the POS terminal in the first example embodiment.
[Fig. 18] FIG. 18 is a diagram illustrating an example of an error display screen displayed by the POS terminal in the first example embodiment.
[Fig. 19] FIG. 19 is a sequence chart illustrating an example of processing of the reception terminal and the management server in the first example embodiment.
[Fig. 20] FIG. 20 is a diagram illustrating an example of a watch list stored in the reception terminal in the first example embodiment.
[Fig. 21] FIG. 21 is a diagram illustrating an example of an error display screen displayed by the reception terminal in the first example embodiment.
[Fig. 22] FIG. 22 is a sequence chart illustrating an example of processing of the boarding gate apparatus and the management server in the first example embodiment.
[Fig. 23] FIG. 23 is a diagram illustrating an example of an error display screen displayed by the boarding gate apparatus in the first example embodiment.
[Fig. 24] FIG. 24 is a schematic diagram illustrating an example of the overall configuration of a biometrics authentication system in a second example embodiment.
[Fig. 25] FIG. 25 is a sequence chart illustrating an example of processing of an automatic customs gate device and the management server in the second example embodiment.
[Fig. 26] FIG. 26 is a schematic diagram illustrating an overall configuration example of a biometrics authentication system in a third example embodiment.
[Fig. 27] FIG. 27 is a diagram illustrating an example of information stored in a guest DB of the third example embodiment.
[Fig. 28] FIG. 28 is a sequence chart illustrating an example of the processing of a user terminal and the management server in the third example embodiment.
[Fig. 29] FIG. 29 is a sequence chart illustrating an example of the processing of a pre-authentication apparatus and the management server in the third example embodiment.
[Fig. 30] FIG. 30 is a sequence chart illustrating an example of the processing of a front terminal and the management server in the third example embodiment.
[Fig. 31] FIG. 31 is a sequence chart illustrating an example of processing of a door control apparatus and the management server in the third example embodiment.
[Fig. 32] FIG. 32 is a sequence chart illustrating an example of the processing of the POS terminal and the management server in a fourth example embodiment.
[Fig. 33] FIG. 33 is a block diagram illustrating functions of an information processing apparatus in a fifth example embodiment.
[Fig. 34] FIG. 34 is a block diagram illustrating functions of a server device in a sixth example embodiment.

### [Description of Embodiments]

Exemplary example embodiments of the disclosure will be described below with reference to the drawings. Throughout the drawings, similar features or corresponding features are labeled with the same references, and the description thereof may be omitted or simplified.

### [First Example Embodiment]

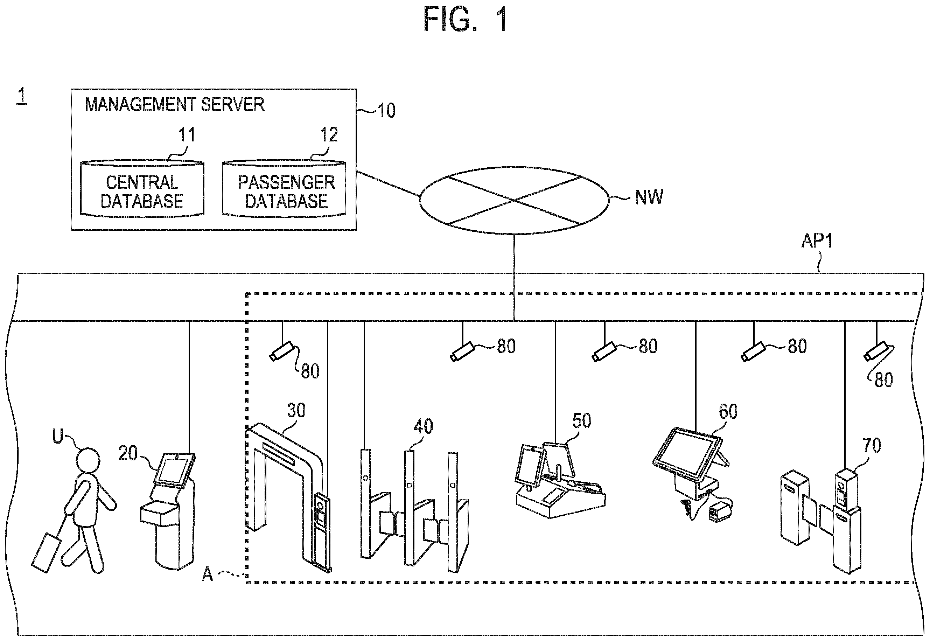

FIG. 1 is a schematic diagram illustrating an overall configuration example of a biometrics authentication system 1 in the present example embodiment. The biometrics authentication system 1 is an information processing system that, when a user U is scheduled to board an aircraft at an airport AP1, determines by a biometrics matching whether or not the user U is permitted to enter a management area A, and whether or not the user U is permitted to conduct a departure examination and conduct a predetermined transaction in the management area A. Note that, in present example embodiment, the term "transaction" means settlement regarding the purchase of goods or use of services, determination regarding the use of services that do not involve settlement process, reservation of use of facilities, management of entry/exit, etc. In addition, the management area A in the present example embodiment indicates a closed space including an area where immigration procedure is carried out after passing through the security inspection apparatus described later, and an departure area where a user U who has completed departure inspection waits until boarding an aircraft.

As illustrated in FIG. 1, the biometrics authentication system 1 includes a management server 10, a check-in terminal 20, a security inspection apparatus 30, an automated gate apparatus 40, a POS (Point of Sales) terminal 50, a reception terminal 60, a boarding gate apparatus 70, and a monitoring camera 80.

The management server 10, the check-in terminal 20, the security inspection apparatus 30, the automated gate apparatus 40, the POS terminal 50, the reception terminal 60, the boarding gate apparatus 70 and the monitoring camera 80 are connected to a network NW. The network NW includes a LAN (Local Area Network) including a local area communication network of an airport AP1, a WAN (Wide Area Network), a mobile communication network, and the like.

The management server 10 is installed in a facility such as an airport company, an airline company or the like which operates the airport AP1, for example. The check-in terminal 20 is installed in a check-in lobby in the airport AP1. The security inspection apparatus (security gate) 30 is installed in a security inspection site in the airport AP1. The automated gate apparatus 40 is installed in an immigration site in the airport AP1. The POS terminal 50 and the reception terminal 60 are installed in the departure area, that is next the immigration site. The boarding gate apparatus 70 is installed in a boarding gate in an airport AP1.

After arriving at the airport AP1, the user U scheduled to board an airplane of an international flight goes through the check-in lobby, the security inspection site, and the immigration site in this order and boards an aircraft at the boarding gate. First, the user U performs a check-in procedure (boarding procedure) on the check-in terminal 20 in the check-in lobby. After the check-in procedure, the user U is subjected to a security inspection procedure by the security inspection apparatus 30 at the security inspection site. After the security inspection, the user U is subjected to an immigration procedure by the automated gate apparatus 40 or staff member in the immigration site. The user U who exited the immigration site passes through the departure area (waiting area) where facilities such as the duty-free store and the like are located and reaches the boarding gate. When the scheduled departure time to the aircraft approaches, the user U passes through the boarding gate apparatus 70 in the boarding gate and boards an airplane.

Note that the user U may be not only a person scheduled to board an airplane of an international flight but also a person scheduled to board an airplane of a domestic flight. In a case of a user U scheduled to board an airplane of a domestic flight, the immigration in the immigration site is not carried out.

The management server 10 is an information processing apparatus for managing the registration information (Passport number, boarding ticket information, identity verification information, etc.) of the user U, the status regarding the departure procedure, and the like. In addition, the management server 10 distributes a watch list used for biometrics authentication to the security inspection apparatus 30 installed at the entrance of the management area A and various edge terminals. The function of the management server 10 may be implemented by a single server or a plurality of server devices.

In the present example embodiment, the term "edge terminal" indicates to various information processing apparatuses such as the automated gate apparatus 40, the POS terminal 50, the reception terminal 60, and the boarding gate apparatus 70. However, the type of the edge terminal is not limited to the above-described device. For example, when a signage terminal (not shown) installed in the management area A displays an advertisement or the like on a screen for each user U by biometrics authentication, the signage terminal is also an edge terminal.

The check-in terminal 20 is a self-terminal for the user U to carry out a check-in procedure (boarding procedure) by himself/herself. Note that the check-in terminal 20 may be a check-in terminal operated by a staff member of an airline company and installed at a manned counter. A check-in procedure (boarding procedure) is a procedure to input for registration at least information used for identifying the user U scheduled to board an airplane. Specifically, the check-in procedure is a procedure to input user information including identity verification information, face information, and boarding information on the user U.

The security inspection apparatus 30 is a device for confirming whether or not a user U is wearing metals which can be dangerous objects by a metal detector gate 310 which is a metal detector. Note that, the security inspection apparatus 30 includes, in addition to a metal detector such as a metal detector gate 310, as well as an X-ray inspection device that uses X-rays to check the presence or absence of dangerous objects in the carry-on baggage and the like.

The automated gate apparatus 40 is a device for automatically performing the immigration procedure of the user U. The user U who can use the immigration procedure by the automated gate apparatus 40 is a person who has completed the security inspection procedure by the security inspection apparatus 30.

The POS terminal 50 is a device for performing settlement process when the user U purchases goods or uses services. The POS terminal 50 is installed in a duty-free store or a shop in a departure area in the airport AP1. The POS terminal 50 of the present example embodiment can use a settlement method based on the biometrics authentication in addition to a settlement method using a medium such as cash, a credit card, and electronic money, or a settlement method using an electronic device such as a smartphone. The details of the settlement method based on the biometrics authentication will be described later.

The reception terminal 60 receives a request from the user U and provides a predetermined service to the user U. For example, the reception terminal 60 is installed in a baggage delivery place for duty-free goods purchased in the city, an application place for home delivery service, or the like.

The boarding gate apparatus 70 is a passage control device installed for each boarding gate. The boarding gate apparatus 70 confirms that the user U is a passenger of an aircraft which can be boarded from the boarding gate.

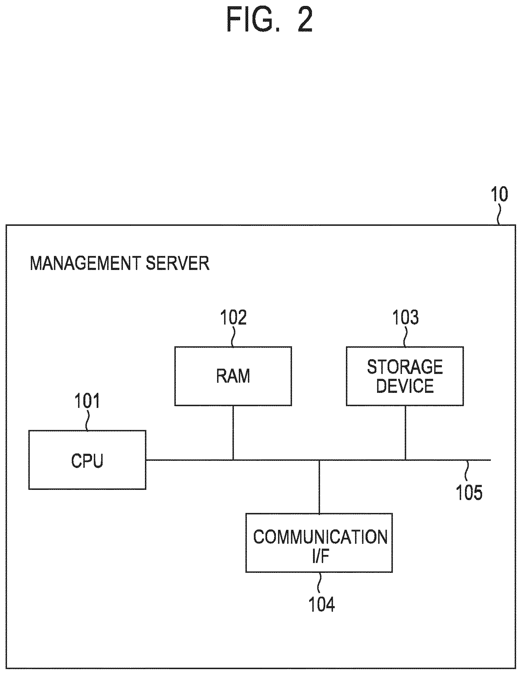

Next, with reference to FIGS. 2 to 8, a hardware configuration example of each device constituting the biometrics authentication system 1 will be described. Note that, in FIGS. 2 to 8, devices having the same name but different only by reference numerals are devices having the same function, and therefore detailed description thereof is omitted in the following drawings.

Fig. 2 is a block diagram illustrating an example of a hardware configuration of the management server 10. As illustrated in the figure, the management server 10 has a central processing unit (CPU) 101, a random access memory (RAM) 102, a storage device 103, and a communication I/F 104. Each device is connected to a bus line 105.

The CPU 101 is a processor having a function of performing a predetermined operation in accordance with a program stored in the storage device 103 and controlling each unit of the management server 10. In the management server 10, the CPU 101 functions as a acquisition unit and a distribute unit. The RAM 102 is formed of a volatile storage medium and provides a temporary memory region required for the operation of the CPU 101.

The storage device 103 is composed of a storage medium such as a nonvolatile memory, a hard disk drive, etc., and functions as a storage unit. The storage device 103 stores a program executed by the CPU 101, data referred to by the CPU 101 when the program is executed, and the like.

The communication I/F 104 is a communication interface based on the specification such as Ethernet (registered trademark), Wi-Fi (registered trademark), 4G, or the like and is a module used for communicating with the check-in terminal 20, etc.

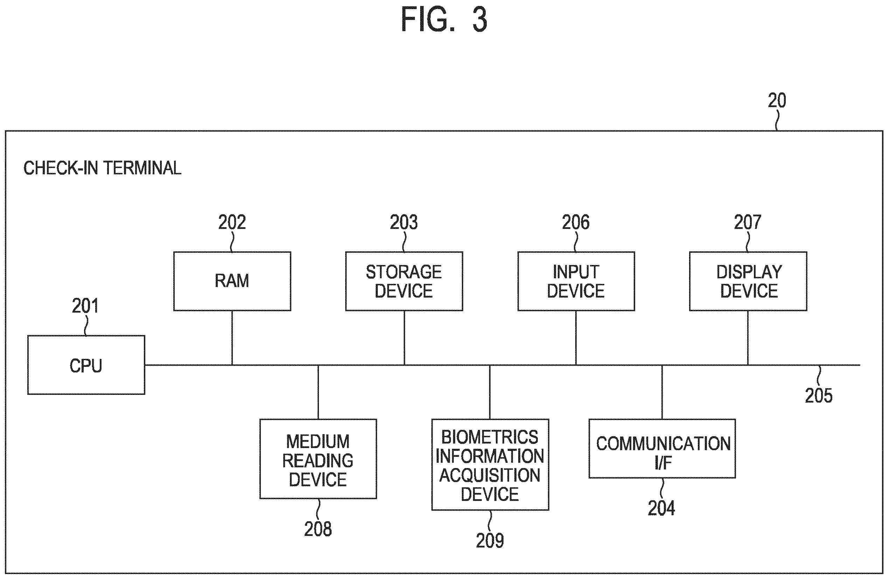

FIG. 3 is a block diagram illustrating an example of a hardware configuration of the check-in terminal 20. As illustrated in the figure, the check-in terminal 20 includes a CPU 201, a RAM 202, a storage device 203, a communication I/F 204, an input device 206, a display device 207, a medium reading device 208, and a biometrics information acquisition device 209. Each device is connected to a bus line 205.

The input device 206 is, for example, a pointing device such as a touch panel or a keyboard. In the check-in terminal 20 of the present example embodiment, the input device 206 and the display device 207 are assumed to be integrally formed as a touch panel. The display device 207 is a liquid crystal display, an Organic Light Emitting Diode (OLED) display, or the like, and is used for displaying moving images, still images, characters, and the like.

The medium reading device 208 is a device that reads a passport or a flight ticket medium of the user U and acquires information recorded on the passport or the flight ticket. A flight ticket medium may be, for example, a flight ticket sheet, a mobile terminal displaying a duplicate of an e-ticket, or the like. The medium reading device 208 is formed of a code reader, an image scanner, a contactless integrated circuit (IC) reader, an optical character reader (OCR) device, or the like, for example, and acquires information from various media held over the reading unit thereof.

For example, the medium reading device 208 reads and acquires identity verification information and passport information on the user U indicated on the passport by using the OCR device. Further, for example, the medium reading device 208 reads and acquires a passport face image of the user U indicated on the passport by using an image scanner. Further, in the case of an IC passport, the medium reading device 208 reads and acquires identity verification information on the user U, passport information, a passport face image, or the like stored in the IC chip of the IC passport by using a contactless IC reader. Further, for example, the medium reading device 208 reads a barcode or a QR code (registered trademark) indicated on a flight ticket medium and acquires identity verification information and boarding information on the user U from the flight ticket medium by using a code reader.

The biometrics information acquisition device 209 is a device that acquires a face image of the user U as biometrics information on the user U carrying out a check-in procedure. The biometrics information acquisition device 209 is a digital camera that captures a face of the user U standing in front of the check-in terminal 20, for example, and captures the face of the user U and acquires the face image thereof.

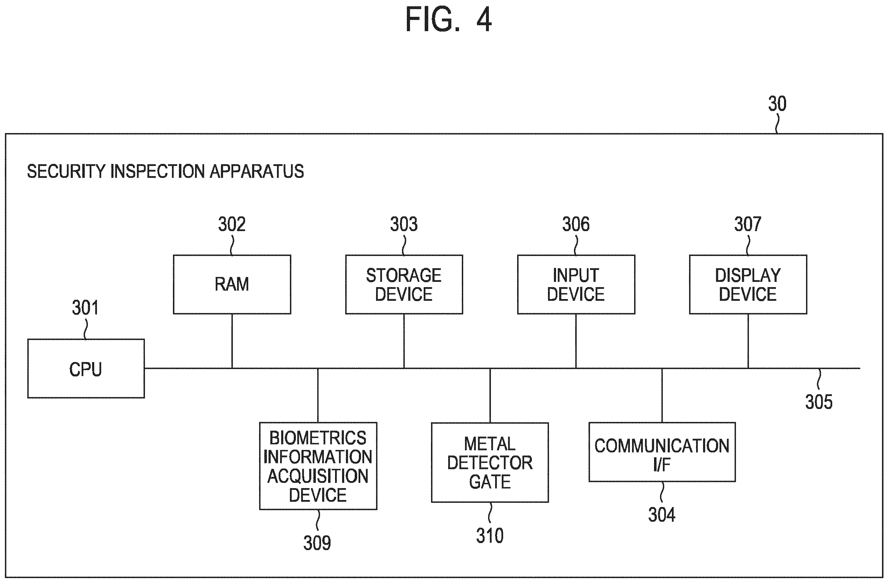

FIG. 4 is a block diagram illustrating an example of a hardware configuration of the security inspection apparatus 30. As illustrated in the figure, the security inspection apparatus 30 includes a CPU 301, a RAM 302, a storage device 303, a communication I/F 304, an input device 306, a display device 307, a biometrics information acquisition device 309, and a metal detector gate 310. Each device is connected to a bus line 305. In the security inspection apparatus 30, the CPU 301 functions as an acquisition unit and a control unit.

The metal detector gate 310 is a gate-type metal detector for detecting metals attached to the user U passing through the metal detector gate 310.

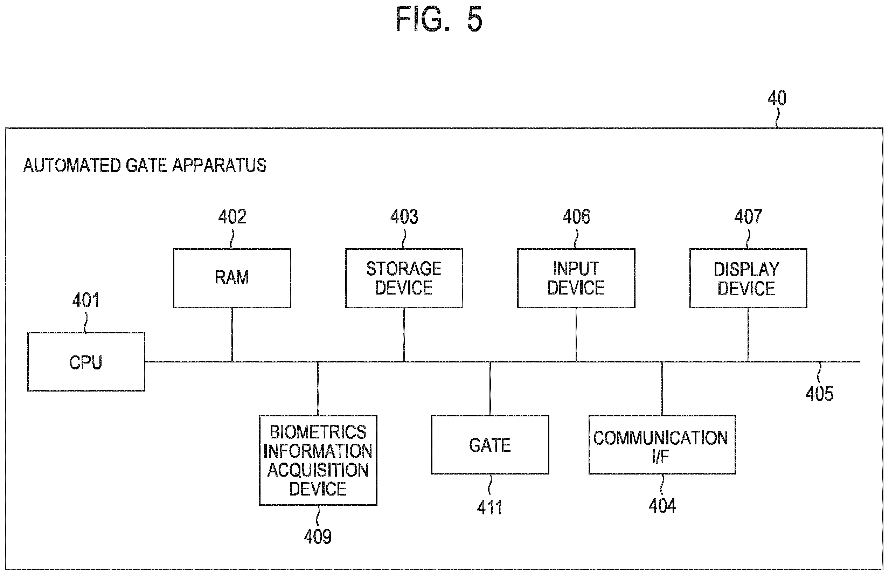

FIG. 5 is a block diagram illustrating an example of a hardware configuration of the automated gate apparatus 40. The automated gate apparatus 40 includes a CPU 401, a RAM 402, a storage device 403, a communication I/F 404, an input device 406, a display device 407, a biometrics information acquisition device 409, and a gate 411. Each device is connected to a bus line 405. In the automated gate apparatus 40, the CPU 401 functions as an acquisition unit and a control unit.

When identity verification of the user U is successful in the automated gate apparatus 40 and the user U passes through an immigration, the gate 411 transfers from a closed state for a standby blocking passage of the user U to an opened state permitting passage of the user U under the control of the CPU 401. The scheme of the gate 411 is not particularly limited and may be, for example, a flapper gate in which one or more flappers provided on one side or both side of the passage are opened or closed, a turn-style gate in which three bars are revolved, or the like.

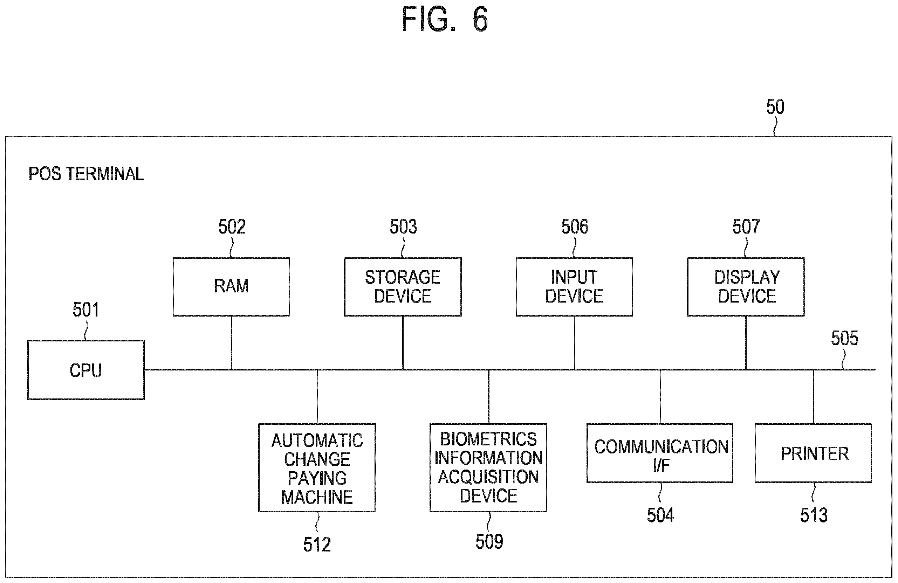

FIG. 6 is a block diagram illustrating an example of a hardware configuration of the POS terminal 50. The POS terminal 50 includes a CPU 501, a RAM 502, a storage device 503, a communication I/F 504, an input device 506, a display device 507, a biometrics information acquisition device 509, an automatic change paying machine 512, and a printer 513. Each device is connected to a bus line 505. In the POS terminal 50, the CPU 501 functions as an acquisition unit and a control unit.

The automatic change paying machine 512 is a device for automatically discharging the money corresponding to the change amount calculated by the CPU 501 to the withdrawal port when the total amount of the money put into the deposit port exceeds the payment amount for purchasing goods or using services. The printer 513 prints a receipt, a credit card usage statement or the like on a paper under the control of the CPU 501.

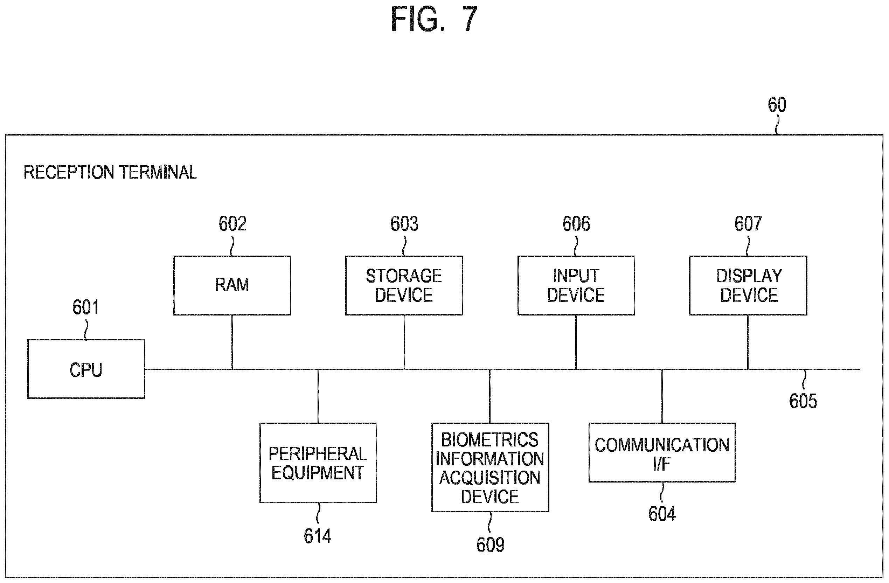

FIG. 7 is a block diagram illustrating an example of a hardware configuration of the reception terminal 60. The reception terminal 60 includes a CPU 601, a RAM 602, a storage device 603, a communication I/F 604, an input device 606, a display device 607, a biometrics information acquisition device 609, and peripheral equipment 614. Each device is connected to a bus line 605. In the reception terminal 60, the CPU 601 functions as an acquisition unit and a control unit.

Peripheral device 614 includes a customer display, a non-contact IC (Integrated Circuit) reader/writer, a printer, a code scanner, and the like. The peripheral device 614 is controlled by the CPU 601. The peripheral device 614 is connected to a USB (Universal Serial Bus) terminal, a communication connector, a display terminal, or the like provided in the reception terminal 60.

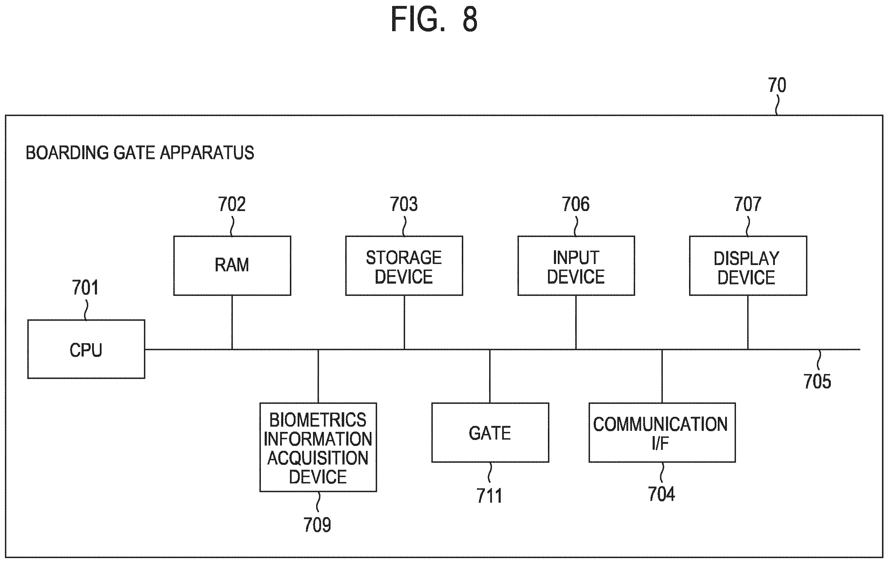

FIG. 8 is a block diagram illustrating an example of a hardware configuration of the boarding gate apparatus 70. As illustrated in the figure, the boarding gate apparatus 70 includes a CPU 701, a RAM 702, a storage device 703, a communication I/F 704, an input device 706, a display device 707, a biometrics information acquisition device 709, and a gate 711. Each device is connected to a bus line 705. In a boarding gate apparatus 70, a CPU 701 functions as an acquisition unit and a control unit.

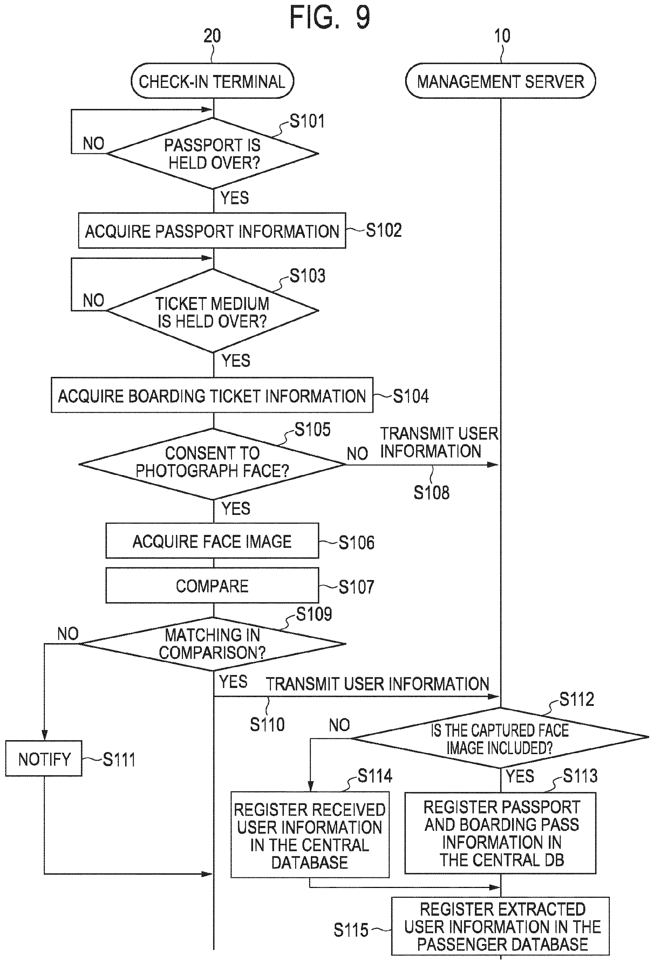

Next, the operation of each device in the biometrics authentication system 1 in the present example embodiment will be described with reference to FIGS. 9 to 23.

### [Check-In Procedure]

FIG. 9 is a sequence chart illustrating an example of the processing of the check-in terminal 20 and the management server 10. This processing is executed every time the user U performs the check-in procedure.

First, the check-in terminal 20 determines whether or not a passport of the user U is held over a reading unit (not shown) of the medium reading device 208 (step S101) and waits until a passport is held over (step S101, NO).

In response to determining that a passport is held over the reading unit of the medium reading device 208 (step S101, YES), the check-in terminal 20 acquires passport information on the user U from the held passport (step S102). The acquired passport information includes a passport face image of the user U. At this time, the medium reading device 208 can also acquire identity verification information on the user U from the passport.

Next, the check-in terminal 20 determines whether or not a flight ticket medium of the user U is held over the reading unit of the medium reading device 208 (step S103) and waits until a flight ticket medium is held over (step S103, NO).

In response to determining that a flight ticket medium is held over the reading unit of the medium reading device 208 (step S103, YES), the check-in terminal 20 acquires boarding ticket information on the user U from the held flight ticket medium (step S104). At this time, the medium reading device 208 can also acquire boarding information (Name, flight number, boarding date, boarding airport, arrival airport, boarding time, arrival time, etc.) of the user U from the flight ticket medium.

Next, the check-in terminal 20 determines whether or not the user U agrees with the face photographing (step S105). When requesting the consent of the user U, for example, the user U may be notified of the purpose of use of the captured face image, the fact that the face image is not used for other purposes, the fact that the face image is deleted after use, etc.

Next, in response to determining that the user U has consented to face photographing (step S105, YES), the check-in terminal 20 captures the face of the user U standing in front of the check-in terminal 20 using the biometrics information acquisition device 209 and acquires a captured face image of the user U (step S106) .

Next, the check-in terminal 20 compares, at 1:1, a captured face image captured by the biometrics information acquisition device 209 with the passport face image acquired by the medium reading device 208 (step S107). After comparison, the process proceeds to step S109.

Furthermore, in response to determining that the user U does not consent to the face photographing (step S105, NO), the check-in terminal 20 transmits the acquired passport information and boarding ticket information to the management server 10 as user information (step S108).

In response to determining that there is a matching in the comparison between the captured face image and the passport face image and identity verification is successful (step S109, YES), the check-in terminal 20 transmits the user information on the user U to the management server 10 via the network NW (step S110). The user information includes identity verification information, face information, and boarding information on the user U associated with each other.

On the other hand, in response to receiving the user information from the check-in terminal 20, the management server 10 determines whether or not the received user information includes a captured face image (step S112) . In response to determining that the received user information includes a captured face image (step S112, YES), the management server 10 registers the received user information in the central DB 11 (step S113). At this time, the management server 10 registers the user information in the central DB 11 by using the captured face image or passport face image included in the user information as a registered face image and by setting the status as check-in completion (status: "1"). Thus, the check-in terminal 20 completes the check-in procedure for the user U based on the user information including the passport information, the boarding ticket information, and the captured face image. Note that, the registered face image is registered not only in the central DB 11 but also in the passenger DB 12 as will be described later.

On the other hand, in response to determining that the user information received from the check-in terminal 20 does not include the captured face image (step S112, NO), the management server 10 registers the passport information and the boarding ticket information of the user U as the user information in the central DB 11 (step S114). At this time, the management server 10 sets the status of the user U as check-in completion (status: "1"). In this way, the check-in terminal 20 completes the check-in procedure based on the user information including the passport information and the boarding ticket information. The user U who has completed the check-in procedure goes to the baggage counter if it is necessary to check the baggage, and goes to the security inspection site if it is not necessary.

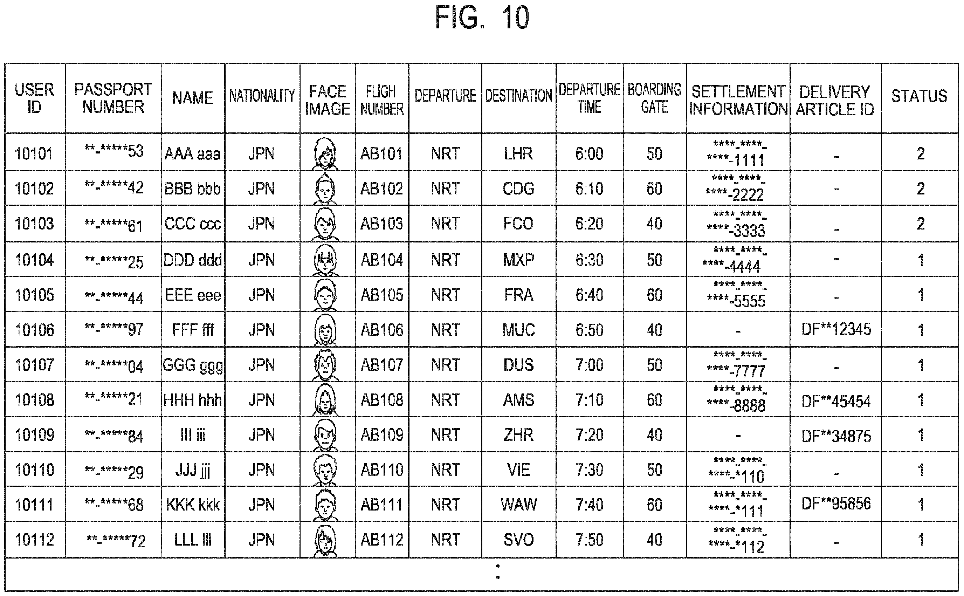

FIG. 10 is a diagram illustrating an example of information stored in the central DB 11. User information about each user U is registered in the central DB 11 for each user ID that is an identifier for identifying a plurality of users U.

The user information registered in the central DB 11 includes identity verification information such as the name and nationality of the user U, a face image as face information, and boarding information such as the flight number, departure place, destination, departure time, and boarding gate of the aircraft on which the user U boards, in association with each other. The boarding information is synchronized with the flight information managed by a flight information DB (not shown).

Furthermore, the user information includes settlement information and the delivery article ID. The settlement information is information of a settlement card such as a credit card or an electronic money card held by the user U. In the biometrics authentication system 1 in the present example embodiment, a face image as biometrics information and settlement information are previously associated with each other. For this reason, the POS terminal 50 can access the system of the card company through the management server 10, for example, and execute the settlement process to the card company or the like based on the settlement information associated with the face image on the condition that the identity verification is successful by the biometrics authentication based on the face image. The timing of acquiring the settlement information of the user U may be, for example, the time of check-in procedure or the time of purchasing a boarding ticket by a credit card. However, in the present example embodiment, the face image of the user U and the settlement information are associated only when the user U desires to use the settlement service based on the face authentication in the managed area.

On the other hand, the delivery article ID is identification information specifying the article kept in the management area A. Examples of the delivery article include article purchased at duty-free shops outside the airport, article delivered to the airport AP1 from a home or a hotel, and goods subject to the baggage storage service in the management area A. For example, the management server 10 may acquire the delivery article ID by using the passport number as key included in the user information acquired through the check-in procedure from another database (not shown) for storing the relationship between the passport number of the passport presented by the user U at the time of purchase of an article at a duty-free shop outside the airport and the purchased article. The delivery article ID of the merchandise purchased at the duty-free shop in the management area A can be related to the user U specified by the face authentication.

Further, the user information includes a status indicating the progress of various procedures until boarding the aircraft. For example, check-in procedure completion (status: "1"), security inspection procedure completion (status: "2"), immigration procedure completion (status: "3"), boarding completion (status: "4"), and the like can be set. The status is updated based on reception information from terminals installed inside and outside the management area A.

Then, the management server 10 extracts user information matching a predetermined extraction condition from the central DB 11 at a predetermined cycle, for example, and registers the extracted user information as passenger information in the passenger DB 12 (step S115). Specifically, user information relating to the user U whose time until the departure time of the aircraft is a predetermined time (for example, 15 minutes) or more is extracted from the user information of all the users U who have completed the check-in procedure. However, in the present example embodiment, in case of the user information of the person who did not agree to face photographing, since there is no registered face image that have been compared, the user information can be excluded from the object of extraction from the central DB 11.

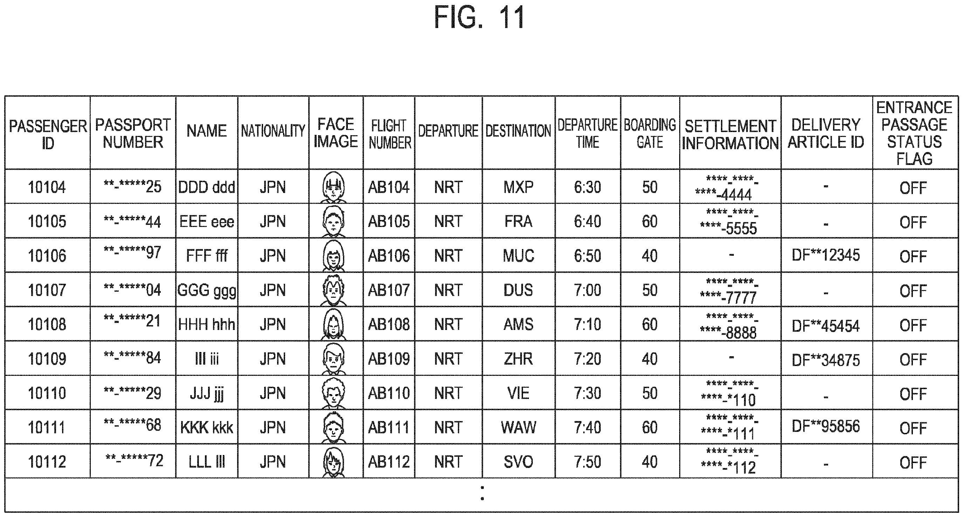

FIG. 11 is a diagram illustrating an example of information stored in the passenger DB 12. In a passenger DB 12, passenger information on each passenger is registered for each passenger ID for identifying a plurality of passengers. In the example of FIG. 11, although the user ID of the central DB 11 is registered as the passenger ID, it is also possible to newly issue a sequence number different from the user ID and register a record as the passenger ID in the passenger DB 12.

The data items in the passenger DB 12 are substantially the same as the data items in the central DB 11 illustrated in FIG. 10. The passenger DB 12 further includes an entrance passage status flag as the data item. When the check-in procedure is completed in the check-in terminal 20, the passenger information is registered in the passenger DB 12 with the value of the "entrance passing status flag" set to "OFF". The value of "OFF" of the"entrance passing status flag" indicates that the user has not passed through the security inspection apparatus 30 yet. Therefore, when the gate passage information of the user U is received from the security inspection apparatus 30, the entrance passage status flag is updated to a value of "ON" indicating entrance passage.

FIG. 11 shows that the records (visitor registration information) stored in the passenger DB 12 are narrowed rather than the records (user information) stored in the central DB 11. That is, user information having user IDs of "10101" to "10103" in the central DB 11 illustrated in FIG. 10 is not included in the passenger information of the passenger DB 12 illustrated in FIG. 11. Such narrowing of the registration information between the databases is performed based on the departure time of the aircraft as described above. Thus, the number of matching subjects (population) in the first biometrics performed at the entrance of the management area A and the number of matching subjects in the second biometrics performed in the management area A can be reduced.

The data configuration of the passenger DB 12 is not limited to the example illustrated in FIG. 11. For example, the passenger DB 12 may include a data item of status in the same manner as the central DB 11. In this case, the entrance passing status flag can be omitted. Since the status management is performed in the central DB 11, the status management may be omitted in the passenger DB 12. When the status of the central DB 11 is updated to a status ("2") indicating the completion of passage through the security inspection site, the management server 10 may distribute the face image to the edge terminal in the security area.

On the other hand, when the check-in terminal 20 determines that the comparison of the captured face image and the passport face image do not match and that the identity verification has failed (step S109, NO), it notifies the user U that the identity verification has failed (step S111). At this time, the check-in terminal 20 causes the display device 207 to display a notification screen for notifying that identity verification has failed. It should be noted that the check-in terminal 20 can notify the user U of the failure in identification by voice, for example, in addition to or instead of displaying the notification screen.

Note that the user U can also perform a check-in procedure at a manned check-in counter instead of the check-in procedure by the check-in terminal 20. In this case, the terminal operated by the check-in counter staff can perform the same processing as the check-in terminal 20 described above. Further, the user U may use the online check-in performed from the website of the airline company instead of the check-in procedure by the check-in terminal 20. In this case, for example, the user U can separately register a face image from a dedicated terminal installed in the airport AP1 as a registered face image in the central DB 11 of the management server 10. In this case, one or both of the passport and the boarding ticket need not be presented. That is, the user U arriving at the airport AP1 can board the aircraft only by face authentication.

### [Security Inspection Procedures]

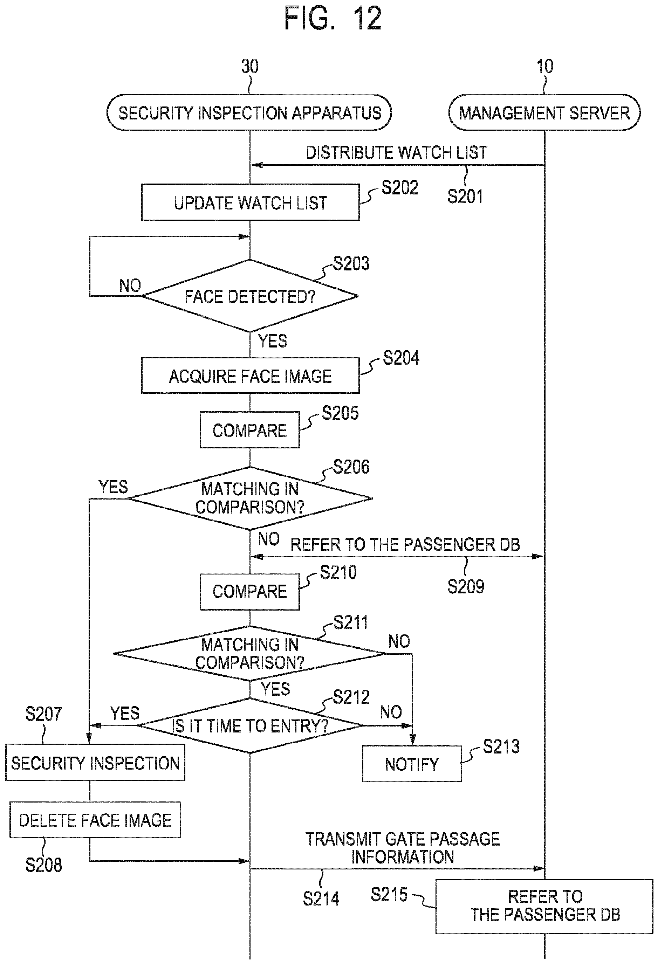

FIG. 12 is a sequence chart illustrating an example of processing by the security inspection apparatus 30 and the management server 10. This process is executed each time the user U who has completed the check-in procedure performs the security inspection procedure.

First, the management server 10 distributes the watch list created based on the passenger information stored in the passenger DB 12 to the security inspection apparatus 30 (step S201). For example, only passenger information of a passenger (For example, a passenger * hours before the boarding time) who can pass the security inspection may be extracted and distributed as a watch list.

Next, the security inspection apparatus 30 updates the watch list stored in the storage device 303 based on the watch list received from the management server 10 (step S202).

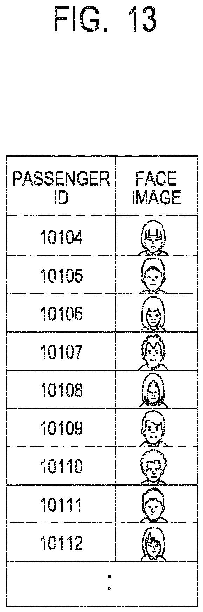

FIG. 13 is a diagram illustrating an example of a watch list stored in the security inspection apparatus 30. Here, it is shown that the watch list is list information in which a passenger ID is associated with a face image. That is, in the watch list illustrated in FIG. 13, the data items are significantly narrowed down in comparison with the passenger information illustrated in FIG. 11. However, the watch list may include all the data items of the passenger DB 12.

Next, when the biometrics information acquisition device 309 constantly or periodically captures the front of the metal detector gate 310, the security inspection apparatus 30 determines whether or not the face of the user U standing in front of the metal detector gate 310 is detected in the captured image (step S203). The security inspection apparatus 30 waits until the face of the user U is detected in the image (step S203, NO).

In response to determining that the face of the user U is detected (step S203, YES), the security inspection apparatus 30 acquires the face image of the user U as a target face image (step S204), and compares the face image of the user U (step S205). A security inspection apparatus 30 performs comparison of a captured object face image and a plurality of registered face images included in a watch list stored in a storage device 303 at 1:N.

As a result of the comparison, if the security inspection apparatus 30 determines that there is a matching in the comparison (step S206, YES), the security inspection apparatus 30 executes the security inspection process of the user U (step S207). In the security inspection process, the CPU 301 controls each part of the security inspection apparatus 30. Thus, the metal detector gate 310 detects the metals attached to the user U passing through the metal detector gate 310. After passing through the metal detector gate 310, the user U goes to the immigration site.

When the user U completes the security inspection procedure, the security inspection apparatus 30 deletes the face image (Biometrics information) related to the passed user U from the watch list of the storage device 303 (step S208).

On the other hand, when a result of the comparison indicates that there is no matching in the comparison, that is, failure in identity verification of the user U without finding a matching registered face image (step S206, NO), the security inspection apparatus 30 refers to the passenger DB 12 of the management server 10 (step S209), and executes comparison process (step S210). That is, when the security inspection apparatus 30 fails in the second biometrics authentication using the watch list, the security inspection apparatus 30 performs the third biometrics authentication with the passenger DB 12.

As a result of the comparison, if the security inspection apparatus 30 determines that there is a matching in the comparison (step S211, YES), the process proceeds to step S212. On the other hand, as a result of the comparison, if the security inspection apparatus 30 determines that there is no matching in the comparison (step S211, NO), the process proceeds to step S213.

In step S212, the security inspection apparatus 30 determines whether or not the current time is the admission time to the management area A based on the departure time included in the passenger information of the passenger DB 12. Here, when the security inspection apparatus 30 determines that the current time is the admission time to the management area A (step S212, YES), the process proceeds to step S207. On the other hand, when the security inspection apparatus 30 determines that the current time is not the admission time to the management area A (step S212, NO), the process proceeds to step S213.

In step S213, the security inspection apparatus 30 notifies the user U that the identity verification has failed. At this time, the security inspection apparatus 30 causes the display device 307 to display a notification screen for notifying that identity verification has failed.

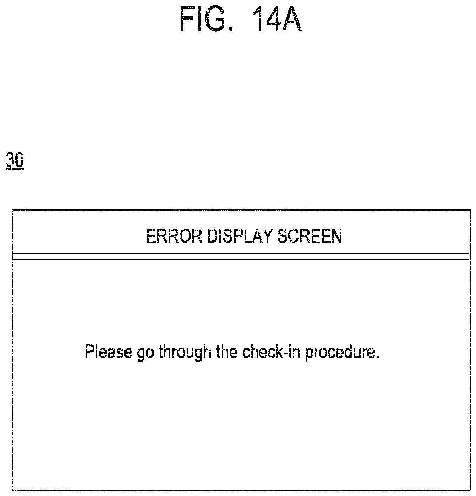

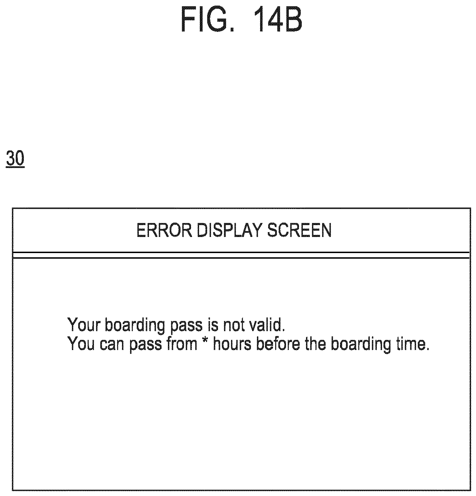

FIGS. 14A and 14B are diagrams illustrating an example of an error display screen displayed by the security inspection apparatus 30. In FIG. 14A, an error message ("Please go through the check-in procedure.") indicating that the first biometrics authentication in the security inspection apparatus 30 has failed due to the incomplete check-in procedure is displayed. This error message is output when the user U tries to perform the procedure in the security inspection apparatus 30 without performing the check-in procedure. When the check-in procedure is not completed, the face image of the user U is not registered in the passenger D 12. Thus, since the face image of the user U is not included in the watch list of the security inspection apparatus 30 as the visitor registration information, the security inspection apparatus 30 outputs an error message.

On the other hand, in FIG. 14B, an error message ("Your boarding pass is not valid. You can pass from * hours before the boarding time.") is displayed. This error message is output when the user U has attempted the procedure in the security inspection apparatus 30 too early. That is, this corresponds to the case where the face image of the user U is registered in the passenger DB 12 (or the central DB 11) but is not included in the watch list stored in the security inspection apparatus 30. Further, when the boarding time stored in the central DB 11 is compared with the current time and the time at which the security inspection can be performed is not reached, a similar error message is displayed. The message displayed by the security inspection apparatus 30 is not limited to the error message illustrated in FIGS. 14A and 14B. For example, when the boarding time stored in the central DB 11 is compared with the current time and it is a time at which the security check can be performed, the watch list may not be distributed due to such as a network failure. For this reason, a guidance message ("Please proceed to the security area.", etc.) similar to that at the time of successful authentication may be displayed.

In step S214, when the security inspection procedure of the user U is completed based on the biometrics authentication, the security inspection apparatus 30 transmits gate passage information including the passenger ID to the management server 10.

When the management server 10 receives the gate passage information from the security inspection apparatus 30, which is an external device, the management server 10 updates the entrance passage status flag of the user U in the passenger DB 12 to "ON" (step S215). At this time, the management server 10 updates the status of the user U in the central DB 11 to "2" (security inspection procedure completed) Thus, the management server 10 controls an entrance passage status flag indicating whether or not the user U has passed the entrance (security inspection apparatus 30) of the management area A based on the matching results between the target face image acquired during the security inspection procedure and the registered face image.

### [Immigration procedure]

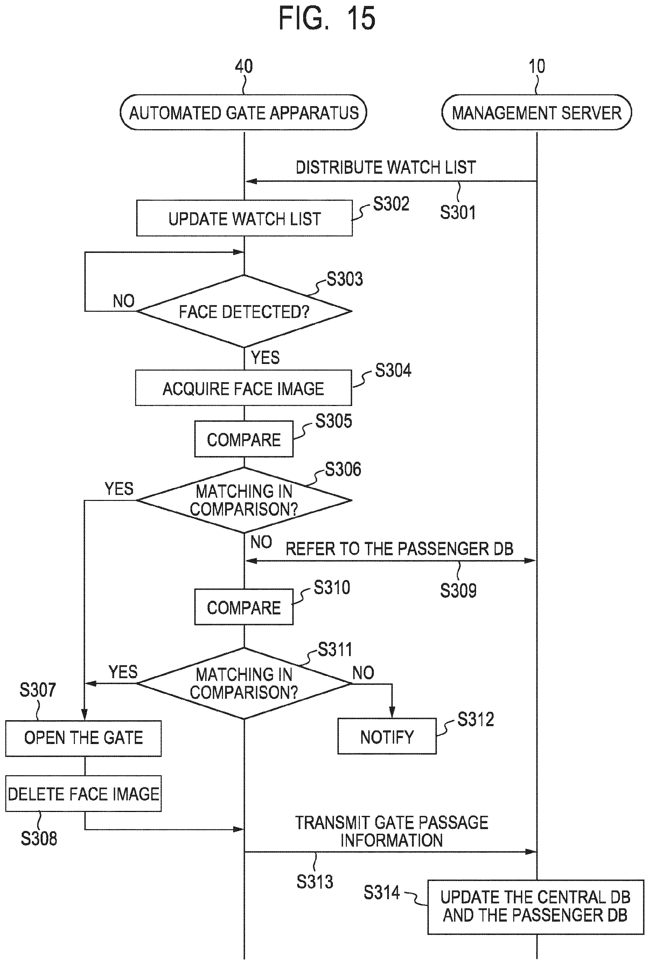

FIG. 15 is a sequence chart illustrating an example of processing by the automated gate apparatus 40 and the management server 10. This processing is executed each time the user U who has completed the security inspection procedure performs the immigration procedure at the departure area.

First, the management server 10 distributes to the automated gate apparatus 40 the watch list created based on the passenger information of the person whose entrance passage status flag is "ON" among the passenger information stored in the passenger DB 12 (step S301). The timing at which the management server 10 distributes the watch list to the automated gate apparatus 40 can be arbitrarily set in consideration of the moving time and the like. For example, all persons whose entrance passage status flag is "ON" in a fixed cycle may be extracted from the passenger DB 12 and distributed. Further, when the entrance passage status flag for a person becomes "ON", the watch list including the person may be distributed. When the flag is updated, the watch list is distributed to the terminal of the next procedure, whereby necessary passenger information (visitor registration information) can be quickly notified.

Next, the automated gate apparatus 40 updates the watch list stored in the storage device 403 according to the watch list received from the management server 10 (step S302). The watch list stored in the automated gate apparatus 40 includes only the users U that have passed through the gate among the watch lists illustrated in FIG. 13.

The automated gate apparatus 40 constantly or periodically captures the front of the automated gate apparatus 40 by the biometrics information acquisition device 409, and determines whether or not the face of the user U standing in front of the automated gate apparatus 40 is detected in the captured image (step S303). The automated gate apparatus 40 waits until the face of the user U is detected in the image (step S303, NO).

Next, in response to determining that the face of the user U is detected (step S303, YES), the automated gate apparatus 40 acquires the face image of the user U as a target face image (step S304), and compares the target face image of the user U with the plurality of registered face images registered in the watch list at 1:N (step S305).

Next, as a result of the comparison, if the automated gate apparatus 40 determines that there is a matching in the comparison (step S306, YES), the automated gate apparatus 40 executes an opening process of the gate 411 (step S307). That is, the automated gate apparatus 40 shifts the gate 411 from a closed state in a standby state for blocking the passage of the user U to an open state for permitting the passage of the user U. The user U passes through the opened gate 411 to go to the departure area.

When the user U passes through the gate 411, the automated gate apparatus 40 deletes the face image (Biometrics information) related to the passed user U from the watch list of the storage device 403 (step S308) .

On the other hand, as a result of the comparison, if the automated gate apparatus 40 determines that there is no matching in the comparison (step S306, NO), the process proceeds to step S309.

In step S309, the automated gate apparatus 40 refers to the passenger DB 12 of the management server 10. Then, the automated gate apparatus 40 executes the comparison process again (step S310). That is, when the second biometrics authentication using the watch list fails, the automated gate apparatus 40 performs the third biometrics authentication with the passenger DB 12.

As a result of the comparison, if the automated gate apparatus 40 determines that there is a matching in the comparison (step S311, YES), the process proceeds to step S307. On the other hand, as a result of the comparison, if the automated gate apparatus 40 determines that there is no matching in the comparison (step S311, NO), the process proceeds to step S312.

In step S312, the automated gate apparatus 40 notifies the user U that the identity verification has failed. In this case, the automated gate apparatus 40 causes the display device 407 to display a notification screen for notifying that the identity verification has failed.

In step S313, when the immigration procedure of the user U is completed based on the biometrics authentication, the automated gate apparatus 40 transmits gate passage information including the passenger ID to the management server 10.

When receiving the gate passage information from the automated gate apparatus 40, the management server 10 updates the status of the user U in the central DB 11 to "3" (completion of the immigration procedure) When the passenger DB 12 holds the status, the management server 10 similarly updates the status in the passenger DB 12 to "3".

### [Execution of Settlement Process by Biometrics Authentication]

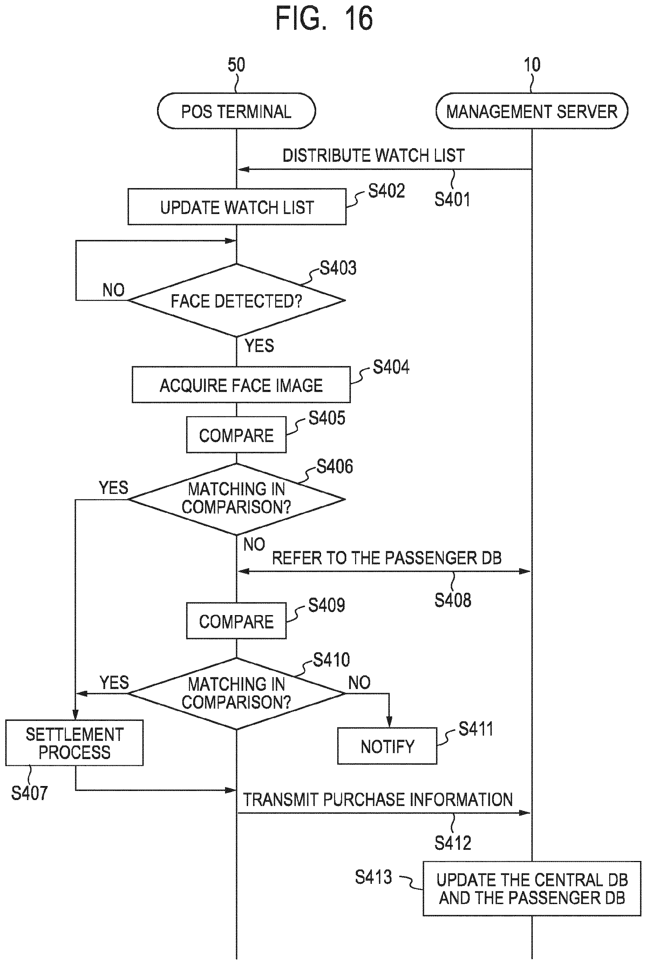

FIG. 16 is a sequence chart illustrating an example of process by the POS terminal 50 and the management server 10. This process is executed when the user U (visitor) performs settlement process relating to the purchase of article or the use of services in the management area A.

First, the management server 10 distributes to the POS terminal 50 a watch list created based on the passenger information of the person including the settlement information among the passenger information stored in the passenger DB 12 (step S401). That is, the passenger information (Visitor registration information) of the person whose face image is associated with the settlement information is extracted.

Note that, the timing at which the management server 10 distributes the watch list to the POS terminal 50 can be arbitrarily set. For example, the management server 10 may extract all the persons whose entrance passage status flag is "ON" in a fixed cycle from the passenger DB 12 and distribute them to the POS terminal 50. Further, when the entrance passage status flag for a person becomes "ON", the watch list including the person may be distributed. By distributing the watch list when the flag is updated, necessary passenger information (visitor registration information) can be quickly notified. Further, the management server 10 may not only complete the security inspection procedure, but also distribute as a watch list only the passenger information of the person (person with status "3") who has passed the automated gate apparatus 40.

Next, the POS terminal 50 updates the watch list stored in the storage device 503 based on the watch list received from the management server 10 (step S402).

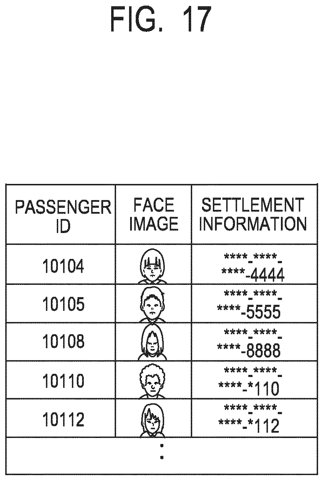

FIG. 17 is a diagram illustrating an example of a watch list stored in the POS terminal 50. The watch list stored in the POS terminal 50 is different from the watch list illustrated in FIG. 13. Specifically, the watch list illustrated in FIG. 17 includes only the user U whose entrance passage status flag is "ON" and whose settlement information is registered, among the passenger information stored in the passenger DB 12. Although the watch list illustrated in FIG. 17 includes the passenger ID, the face image and the settlement information as data items, the data items are not limited thereto. The data items of the watch list may be the same as those of the passenger DB 12, or may be only a face image and a passenger ID as FIG. 13.

Next, when the user U requests the POS terminal to execute the settlement process, the POS terminal 50 determines whether or not the face of the user U is detected in the image captured by the biometrics information acquisition device 509 (step S403). The POS terminal 50 waits until the face of the user U is detected in the image (step S403, NO).

Next, in response to determining that the face of the user U is detected (step S403, YES), the POS terminal 50 acquires the face image of the user U as a target face image (step S404), and compares the target face image of the user U with the plurality of registered face images registered in the watch list at 1:N (step S405).

Next, as a result of the comparison, if the POS terminal 50 determines that there is a matching in the comparison (step S406, YES), the POS terminal 50 executes the settlement process requested by the user U (step S407) . Thus, the POS terminal 50 completes the settlement process based on the second biometrics authentication without using a medium such as cash or a credit card.

Note that the POS terminal 50 may refer to the passenger DB 12 or the like of the management server 10 using the passenger ID of the user U acquired by the second biometrics authentication as a key, display the acquired passport number and the information of the airline ticket on the display device 507, and execute the settlement process after the confirmation by the attendant is completed. In addition, not only the biometrics information (face image) but also the inputting of a PIN code may be added to the start condition of the settlement process.

On the other hand, as a result of the comparison, if the POS terminal 50 determines that there is no matching in the comparison (step S406, NO), the process proceeds to step S408.

In step S408, the POS terminal 50 refers to the passenger DB 12 of the management server 10. Then, the POS terminal 50 executes the comparison process again (step S409). That is, when the second biometrics authentication using the watch list fails, the POS terminal 50 performs the third biometrics authentication with the passenger DB 12.

Next, as a result of the comparison, if the POS terminal 50 determines that there is a matching in the comparison (step S410, YES), the process proceeds to step S407. On the other hand, as a result of the comparison, if the POS terminal 50 determines that there is no matching in the comparison (step S410, NO), the process proceeds to step S411.

In step S411, the POS terminal 50 notifies the user U that the identity verification has failed. In this case, the POS terminal 50 causes the display device 507 to display a notification screen for notifying that the identity verification has failed.

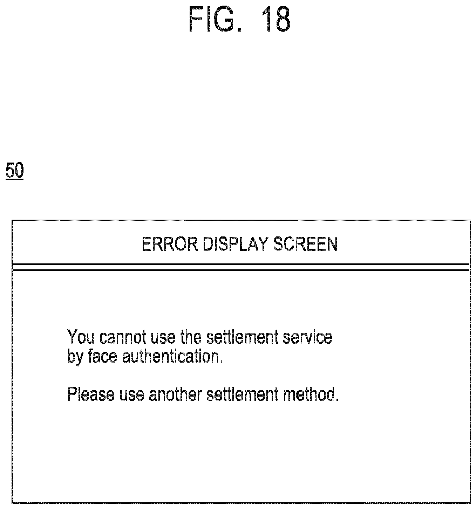

FIG. 18 is a diagram illustrating an example of an error display screen displayed by the POS terminal 50. There is an error message ("You cannot use the settlement service by face authentication. Please use another settlement method."). This error message is displayed when the combination of the face image of the user U and the settlement information is not registered in either the watch list or the passenger DB 12.

In step S412, when the settlement process of the user U is completed based on the biometrics authentication, the POS terminal 50 transmits the passenger ID and the purchased merchandise information to the management server 10. In this case, regarding the article to be delivered later, it is preferable that the POS terminal 50 transmits the delivery information together.

When the management server 10 receives the passenger ID and the purchased article information from the POS terminal 50, the management server 10 updates the purchased article information in the central DB 11 and the passenger DB 12 (step S413). When an article that requires delivery is purchased, the delivery information is registered in the central DB 11 and the passenger DB 12 and is used for the delivery service of the article described later.

Thus, the POS terminal 50 can use the biometrics authentication to control the execution of settlement process in the purchase of article and the use of services in the management area A.

### [Provision of Services Using Biometrics Authentication]

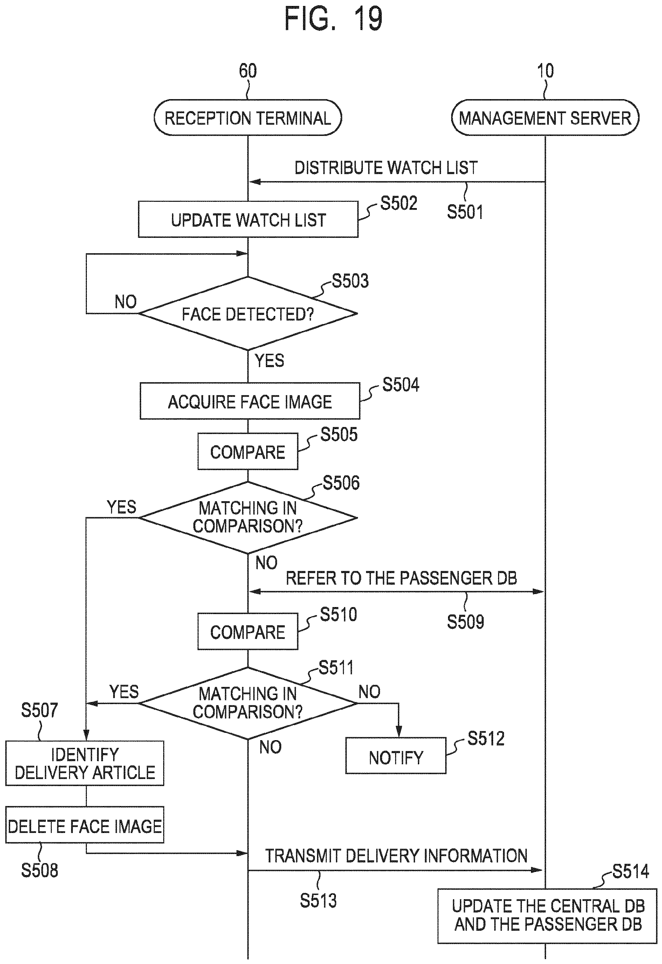

FIG. 19 is a sequence chart illustrating an example of processing by the reception terminal 60 and the management server 10. This processing is executed, for example, when the user U (visitor) uses a free service in the management area A. Hereinafter, the case where the user U uses the delivery service of the article such as the duty-free goods at the baggage storage will be described.

First, the management server 10 distributes to the reception terminal 60 a watch list created based on the passenger information of the person including the delivery information of the article (delivery article ID) among the passenger information stored in the passenger DB 12 (step S501). The timing at which the management server 10 distributes the watch list to the reception terminal 60 can be set in the same manner as in the case of the POS terminal 50 described above.

Next, the reception terminal 60 updates the watch list stored in the storage device 603 based on the watch list received from the management server 10 (step S502).

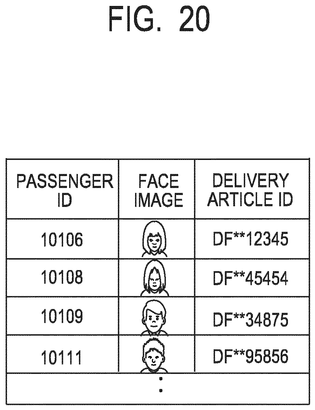

FIG. 20 is a diagram illustrating an example of a watch list stored in the reception terminal 60. The watch list stored in the reception terminal 60 is different from the watch list illustrated in FIGS. 13 and 17. Specifically, it is assumed that the watch list illustrated in FIG. 20 includes only the user U whose entrance passage status flag is "ON" and whose delivery article ID is registered in the passenger information stored in the passenger DB 12. That is, the passenger information (Visitor registration information) of the person whose face image is associated with the article delivery service is extracted. Although the watch list illustrated in FIG. 20 uses the passenger ID, the face image and the delivery article ID as data items, the data items are not limited thereto. The data items of the watch list may be the same as those of the passenger DB 12, or may be only a face image and a passenger ID as illustrated in FIG. 13.

Next, when the user U requests the use of the service, the reception terminal 60 determines whether or not the face of the user U is detected in the image taken by the biometrics information acquisition device 609 (step S503) . The reception terminal 60 waits until the face of the user U is detected in the image (step S503, NO) .

Next, when it is determined that the face of the user U is detected (step S503, YES), the reception terminal 60 acquires the face image of the user U as a target face image (step S504), and compares the target face image of the user U with the plurality of registered face images registered in the watch list at 1:N (step S505).

Next, as a result of the comparison, if the reception terminal 60 determines that there is a matching in the comparison (step S506, YES), the reception terminal 60 specifies the article of the delivery article ID associated with the passenger ID (step S507). Thus, the reception terminal 60 completes the delivery process of the article based on the face authentication without using a medium for identity verification such as a passport. In response to completion of delivery of the article, the reception terminal 60 deletes the face image (Biometrics information) of the user U from the watch list (step S508).

On the other hand, as a result of the comparison, if the reception terminal 60 determines that there is no matching in the comparison (step S506, NO), the process proceeds to step S509.

In step S509, the reception terminal 60 refers to the passenger DB 12 of the management server 10. The reception terminal 60 then executes the comparison process again (step S510) . That is, when the reception terminal 60 fails in the second biometrics authentication using the watch list, the reception terminal 60 performs the third biometrics authentication with the passenger DB 12.

As a result of the comparison, if the reception terminal 60 determines that there is a matching in the comparison (step S511, YES), the process proceeds to step S507. On the other hand, as a result of the comparison, if the reception terminal 60 determines that there is no matching in the comparison (step S511, NO), the process proceeds to step S512.

In step S512, the reception terminal 60 notifies the user U that the identity verification has failed. In this case, the reception terminal 60 causes the display device 607 to display a notification screen for notifying that the identity verification has failed.

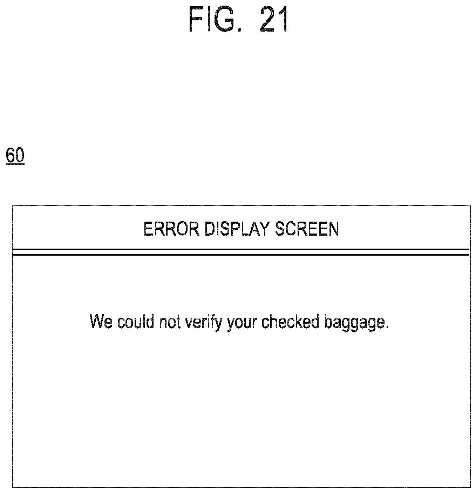

FIG. 21 is a diagram illustrating an example of an error display screen displayed by the reception terminal 60. In this case, an error message ("We could not verify your checked baggage.") is displayed on the error display screen. This error message is displayed when the combination of the face image of the user U and the delivery article ID is not registered in either the watch list or the passenger DB 12.

In step S513, in response to completion of the article delivery process to the user U based on the biometrics authentication, the reception terminal 60 transmits the passenger ID and delivery information to the management server 10.

In response to receiving the passenger ID and delivery information from the reception terminal 60, the management server 10 updates the information relating to the delivery service in the central DB 11 and the passenger DB 12 (step S514).

In this way, the reception terminal 60 can control the execution of transactions that do not involve settlement process, such as the process of determining the availability of various services in the management area A.

### [Traffic Control at the Boarding Gate]

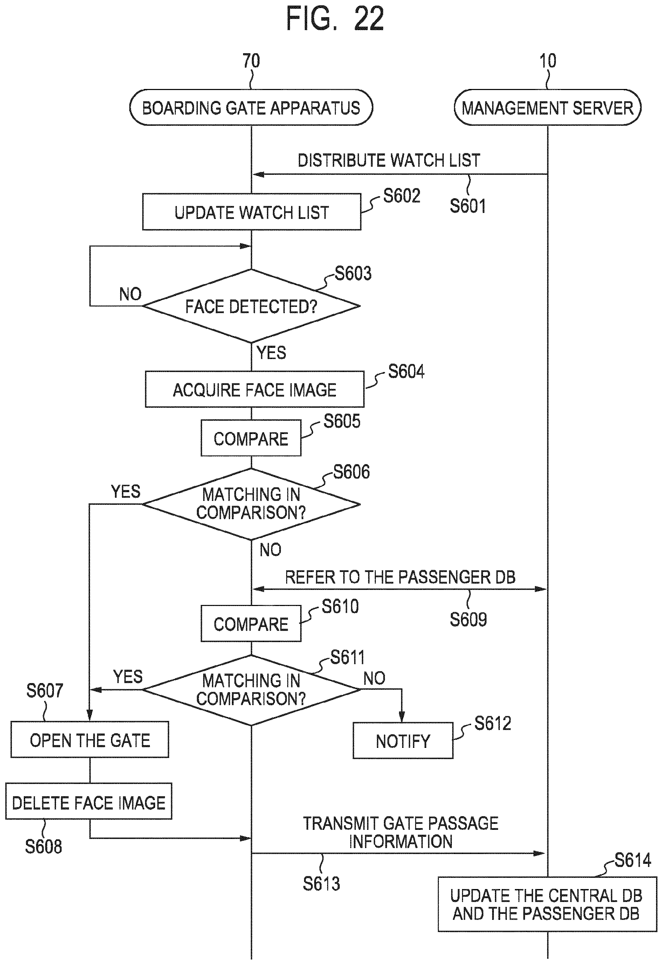

FIG. 22 is a sequence chart illustrating an example of processing by the boarding gate apparatus 70 and the management server 10. This processing is executed when the user U rides the aircraft from the boarding gate.

First, the management server 10 distributes to the boarding gate apparatus 70 a watch list created for each boarding gate based on the passenger information of the person whose entrance passage status flag is "ON" among the passenger information stored in the passenger DB 12 (step S601). That is, it is assumed that the watch list is distributed to the boarding gate apparatus 70 corresponding to a certain boarding gate, excluding the face image of a person boarding an aircraft departing from another boarding gate. The timing at which the management server 10 distributes the watch list to the boarding gate apparatus 70 can be set in the same manner as in the case of the POS terminal 50 described above.

Next, the boarding gate apparatus 70 updates the watch list stored in the storage device 703 according to the watch list received from the management server 10 (step S602).

Next, the boarding gate apparatus 70 constantly or periodically photographs the front of the boarding gate apparatus 70 by the biometrics information acquisition device 709, and determines whether or not the face of the user U standing in front of the boarding gate apparatus 70 is detected in the captured image (step S603). The boarding gate apparatus 70 waits until the face of the user U is detected in the image (step S603, NO) .

Next, when the boarding gate apparatus 70 determines that the face of the user U is detected (step S603, YES), the boarding gate apparatus 70 acquires the face image of the user U as a target face image (step S604), and compares the target face image with a plurality of registered face images included in a watch list stored in the storage device 703 at 1:N (step S605) .

As a result of the comparison, if the boarding gate apparatus 70 determines that there is a matching in the comparison (step S606, YES), the boarding gate apparatus 70 executes opening processing of the gate 711 (step S607). Thus, the boarding gate apparatus 70 shifts the gate 711 from a closed state at a standby time for blocking the passage of the user U to an open state for permitting the passage of the user U. A user U passes through an open gate 711 to board an aircraft.

Next, the boarding gate apparatus 70 deletes the face image of the user U who has passed the gate 711, that is, has boarded the aircraft, from the watch list stored in the storage device 703 (step S608). It should be noted that the face image may be deleted later based on the departure time of the aircraft or the like, rather than immediately after passing through the gate 711.

On the other hand, as a result of the comparison, if the boarding gate apparatus 70 determines that there is no matching in the comparison (step S606, NO), the process proceeds to step S609.

In step S609, the boarding gate apparatus 70 refers to the passenger DB 12 of the management server 10. Then, the boarding gate apparatus 70 executes the comparison process again (step S610). That is, when the second biometrics authentication using the watch list fails, the boarding gate apparatus 70 performs the third biometrics authentication with the passenger DB 12.

As a result of the comparison, if the boarding gate apparatus 70 determines that there is a matching in the comparison (step S611, YES), the process proceeds to step S607. On the other hand, as a result of the comparison, if the boarding gate apparatus 70 determines that there is no matching in the comparison (step S611, NO), the process proceeds to step S612.

In step S612, the boarding gate apparatus 70 notifies the user U. That is, the boarding gate apparatus 70 issues a notification indicating that identity verification has failed or that confirmation of boarding information has failed. Specifically, the boarding gate apparatus 70 causes the display device 707 to display a notification screen for notifying that the identity verification has failed or that the confirmation of the boarding information has failed.

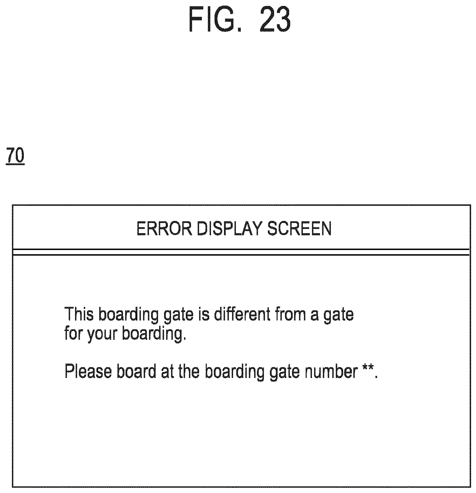

FIG. 23 is a diagram illustrating an example of an error display screen displayed by the boarding gate apparatus 70. In this case, an error message ("This boarding gate is different from a gate for your boarding. Please board at the boarding gate number **.") is displayed on the error display screen. This error message is displayed when the face image of the user U is not included in the watch list of the boarding gate apparatus 70, but the face image of the user U is associated with another boarding gate in the passenger DB 12. The boarding gate apparatus 70 can guide the correct boarding gate by referring to the passenger DB 12.

In step S613, when the user U passes through the boarding gate based on the biometrics authentication, the boarding gate apparatus 70 transmits gate passage information including the passenger ID to the management server 10.

When receiving the gate passage information from the boarding gate apparatus 70, the management server 10 updates the status in the central DB 11 to "4" (boarding completion) (step S614). Furthermore, the management server 10 deletes the passenger information of the person on board the aircraft from the passenger DB 12 when the aircraft departs from the airport or the current time exceeds the scheduled departure time of the aircraft. By redistributing the updated watch list, the management server 10 deletes the information of the person from the watch list of the edge terminal in the management area A.

As described above, according to the biometrics authentication system 1 in the present example embodiment, a biometrics information group (visitor registration information) of a person who is permitted to enter a management area requiring high security, such as an airport departure area, is distributed to various edge terminals in the management area A as a watch list. Thus, the user U can purchase article or use services in the management area A only by biometrics authentication without requiring a medium such as a passport, identification card, credit card or passport. That is, the convenience of the user U can be improved.

In addition, the number of data in the biometrics information group (watch list) to be an matching destination in the second biometrics authentication performed at the edge terminal in the management area A is much smaller than the number of data in the biometrics information group to be an matching destination in the first biometrics authentication performed at the entrance (security inspection apparatus 30) of the management area A. Thus, the processing speed in the second biometrics authentication can be improved.

Since the watch list distributed from the management server 10 to the edge terminal in the management area A is appropriately changed and distributed according to the kind of the edge terminal, the processing speed in the second biometrics authentication performed by the edge terminal can be further improved.

### [Second Example Embodiment]

A biometrics authentication system 2 in a second example embodiment will be described below. Note that references common to the references provided in the drawings in the first example embodiment indicate the same components. The description of features common to those of the first example embodiment will be omitted, and different features will be described in detail.

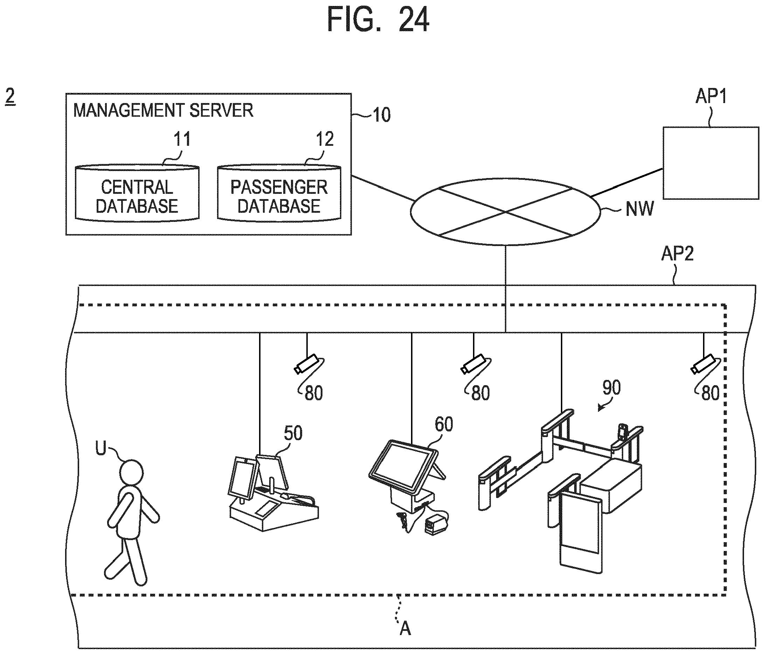

FIG. 24 is a schematic diagram illustrating an overall configuration example of the biometrics authentication system 2 in the present example embodiment. Here, the case where the management area A is set across the airport AP1 of the country of departure (the first country) and the airport AP2 of the country of arrival (the second country) is shown. That is, the management server 10 of the present example embodiment is assumed to share the biometrics information of the user U between airports of a plurality of countries. The management server 10 distributes the registered biometrics information of the user U as a watch list (visitor registration information) to the edge terminals installed at the airport facilities of respective the country of departure and the country of arrival, because the management area includes the airport facilities of the country of departure and the country of arrival.

As illustrated in FIG. 24, in addition to the POS terminal 50 and the reception terminal 60, an automatic customs gate device 90 is installed in the management area A of the airport AP2. The automatic customs gate device 90 is installed in a customs inspection site. When the user U makes a customs declaration by himself/herself at a kiosk terminal (not shown), the user U is guided to an automatic customs gate device 90 or a manned booth where a customs officer is present according to the contents of the customs declaration. The automatic customs gate device 90 determines the gate passage of the user U, that is, the propriety of entry based on the result of the biometrics authentication using the watch list previously distributed from the management server 10. The automatic customs gate device 90 includes an entrance gate terminal 90A and an exit gate terminal 90B, and each terminal is installed at an entrance and an exit of a gate passage, respectively. The user U is restricted from leaving the gate by door control by an entrance gate terminal 90A and an exit gate terminal 90B. The watch list distributed to the automatic customs gate device 90, the POS terminal 50, and the reception terminal 60 is information including a face image of a person on board the arriving aircraft and a passenger ID, which is the same as in the case of the first example embodiment.

The operation of the apparatus of the biometrics authentication system 2 in the present example embodiment will be described below. Since the operations of the POS terminal 50 and the reception terminal 60 are the same as those of the first example embodiment, the automatic customs gate device 90 will be described.

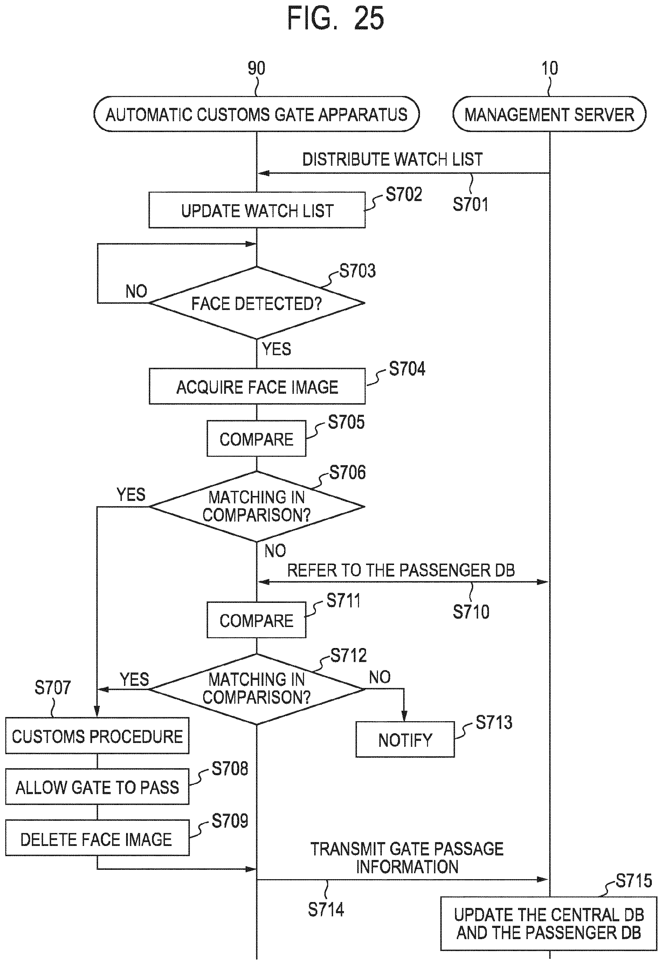

FIG. 25 is a sequence chart illustrating an example of processing by the automatic customs gate device 90 and the management server 10. This processing is executed when the user U disembarked from the aircraft performs a customs procedure at the airport AP2.

First, the management server 10 distributes, to the automatic customs gate device 90, the watch list created for the passenger information of the user U on board the aircraft arriving at the airport AP2, among the passenger information stored in the passenger DB 12 (step S701). For example, the management server 10 may distribute the watch list of the identified person to the automatic customs gate device 90 upon arrival of the aircraft at the airport AP2.

Next, the automatic customs gate device 90 updates the watch list stored in the storage device according to the watch list received from the management server 10 (step S702).

The automatic customs gate device 90 constantly or periodically photographs the front of the automatic customs gate device 90 and determines whether or not the face of the user U standing in front of the gate is detected in the captured image (step S703) . The automatic customs gate device 90 waits until the face of the user U is detected in the image (step S703, NO).

Next, when the automatic customs gate device 90 determines that the face of the user U is detected (step S703, YES), the automatic customs gate device 90 acquires the face image of the user U as a target face image (step S704), and compares the target face image of the user U with the plurality of registered face images registered in the watch list at 1:N (step S705).

Next, as a result of the comparison, if the automatic customs gate device 90 determines that there is a matching in the comparison (step S706, YES), the customs procedure is completed (step S707), and the gate opening processing is executed (step S708). Thus, the automatic customs gate device 90 shifts the gate from a closed state at a standby time for blocking the passage of the user U to an open state for permitting the passage of the user U. User U enters the second country through an open gate.

When the user U passes the gate, the automatic customs gate device 90 deletes the face image (Biometrics information) related to the passed user U from the watch list of the storage device (step S709).

On the other hand, as a result of the comparison, if the automatic customs gate device 90 determines that there is no matching on the watch list (step S706, NO), the process proceeds to step S710.

In step S710, the automatic customs gate device 90 refers to the passenger DB 12 of the management server 10. Then, the automatic customs gate device 90 executes the comparison process again (step S711). That is, the automatic customs gate device 90 performs the third biometrics authentication with the passenger DB 12 when the second biometrics authentication using the watch list fails.

As a result of the comparison, if the automatic customs gate device 90 determines that there is a matching in the comparison (step S712, YES), the process proceeds to step S707. On the other hand, as a result of the comparison, if the automatic customs gate device 90 determines that there is no matching in the comparison (step S712, NO), the process proceeds to step S713.

In step S713, the automatic customs gate device 90 notifies the user U that the identity verification has failed. In this case, the automatic customs gate device 90 causes a display device to display a notification screen for notifying that the identity verification has failed.

In step S714, the automatic customs gate device 90 transmits gate passage information to the management server 10. Then, the management server 10 updates the central DB 11 and the passenger DB 12 (step S715), thereby deleting the face image of the entered user U from the passenger DB 12 and the edge terminals of the airport AP2.

As described above, according to the biometrics authentication system 2 in the present example embodiment, the biometrics information group (visitor registration information) used for biometrics authentication in the country of departure is shared between the country of departure and the country of arrival. For this reason, settlement process by biometrics authentication and use of services by biometrics authentication in the management area A can be performed in the country of arrival in the same manner as in the country of departure. In addition, customs procedures based on biometrics authentication will be possible without presenting a passport or other media in a second country.

### [Third Example Embodiment]

A biometrics authentication system 3 in a third example embodiment will be described below. Note that references common to the references provided in the drawings in the first example embodiment indicate the same components. The description of features common to those of the first example embodiment will be omitted, and different features will be described in detail.

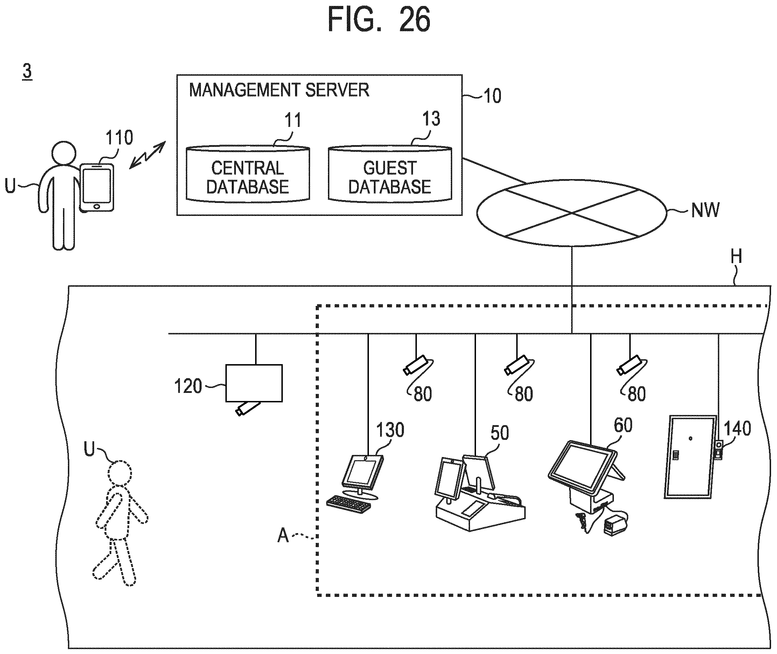

FIG. 26 is a schematic diagram illustrating an overall configuration example of the biometrics authentication system 3 in the present example embodiment. Here, the management area A is set in the facility of the hotel H. That is, unlike the case of the example embodiment described above, the entry into and exit from the management area A is not restricted by the gate device. Since the management area A in the present example embodiment is not a closed space with physically restricted admission, admission to the management area A (passage through the entrance) shall be determined based on the presence or absence of a check-in procedure at the front desk.

A user terminal 110 is an electronic device such as a smartphone, a personal computer, a tablet terminal or the like which is used by the user U to make a reservation to stay at a hotel. In the present example embodiment, a smartphone is used as the user terminal 110.

A pre-authentication device 120 is installed at such as an entrance of the site of a hotel, and is a device for capturing a face image of a passerby on the site prior to entry to a management area, and for performing biometrics authentication (Hereinafter referred to as "pre-biometrics authentication") on biometrics information of a user (accommodation reservation person) stored in the central DB 11.

A front terminal 130 is installed at such as a front desk of a hotel and is a device for performing check-in procedures of the user U and various procedures in the hotel. A door control apparatus 140 is installed at each door of a guest room of a hotel and controls unlocking and locking of the door. As for the edge terminals in the present example embodiment, the POS terminal 50, the reception terminal 60, and the door control apparatus 140 provided in the management area A are applicable.

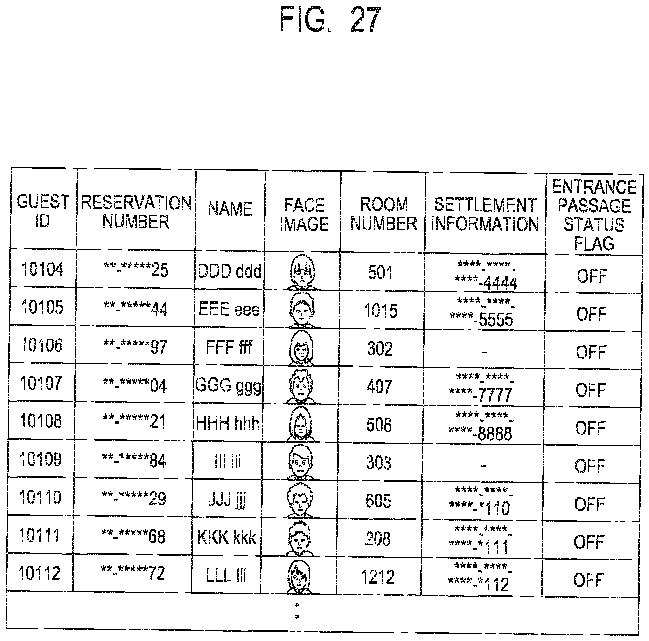

FIG. 27 is a diagram illustrating an example of information stored in a guest DB 13. In the guest DB 13, guest information related to each guest is registered for every guest ID which is an identifier for identifying a plurality of users U. The guest information illustrated in FIG. 27 includes, in addition to the guest ID, a reservation number for identifying the reservation information, identity verification information such as a face image and a name of the guest, accommodation information such as an arrival date, a departure date and a room number, settlement information, and an entrance passage status flag.

### [Accommodation Reservation]

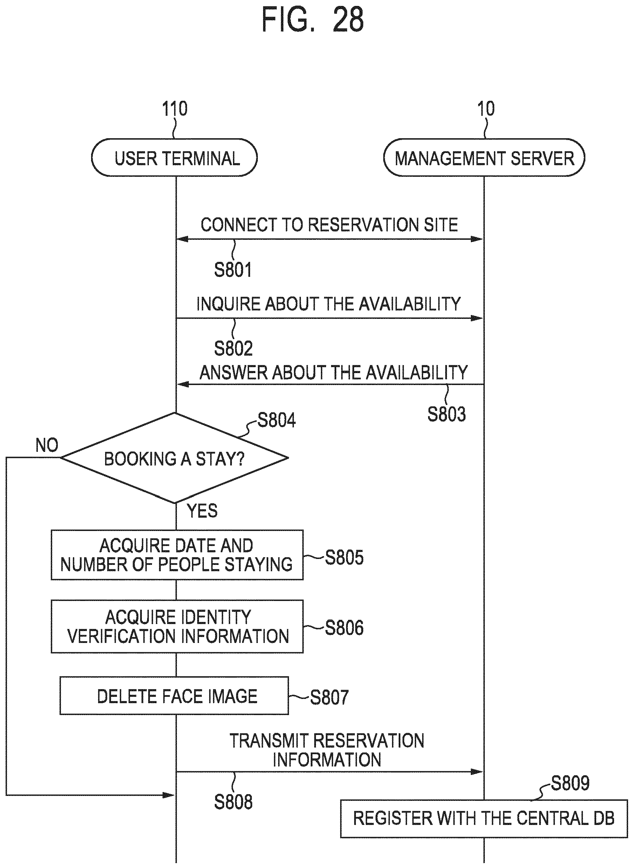

FIG. 28 is a sequence chart illustrating an example of processing by the user terminal 110 and the management server 10.

First, when the user terminal 110 connects to the reservation site provided by the management server 10 (step S801), the user terminal 110 inquires about the vacant state of the guest room satisfying the desired condition (step S802).

Next, in response to an inquiry from the user terminal 110, the management server 10 answers the vacant state of the guest room (step S803).

Next, the user terminal 110 determines whether or not there is a request for accommodation reservation from the user U (step S804). When the user terminal determines that there is a request for accommodation reservation from the user U (step S804, YES), the process proceeds to step S805. On the other hand, when the user terminal determines that there is no request for accommodation reservation from the user U (step S804, NO), the process ends.

In step S805, the user terminal 110 acquires accommodation reservation information such as the accommodation period (arrival date to departure date) and the number of people, which is inputted by the user U. Next, the user terminal 110 acquires the identity verification information inputted by the user U (step S806) .

Next, the user terminal 110 acquires the face image of the user U by capturing the face image of the user U using, for example, a camera function (step S807). However, in the case where the user U does not wish to use the settlement service or the facility reservation service in the hotel using biometrics authentication, the registration of the face image and the settlement information is unnecessary.

Next, the user terminal 110 transmits reservation information including the acquired accommodation information, identity verification information, and Biometrics information to the management server 10 (step S808). In response to this, the management server 10 registers the reservation information in the central DB 11 (step S809).

### [Pre-Certification at Facility Entrance]

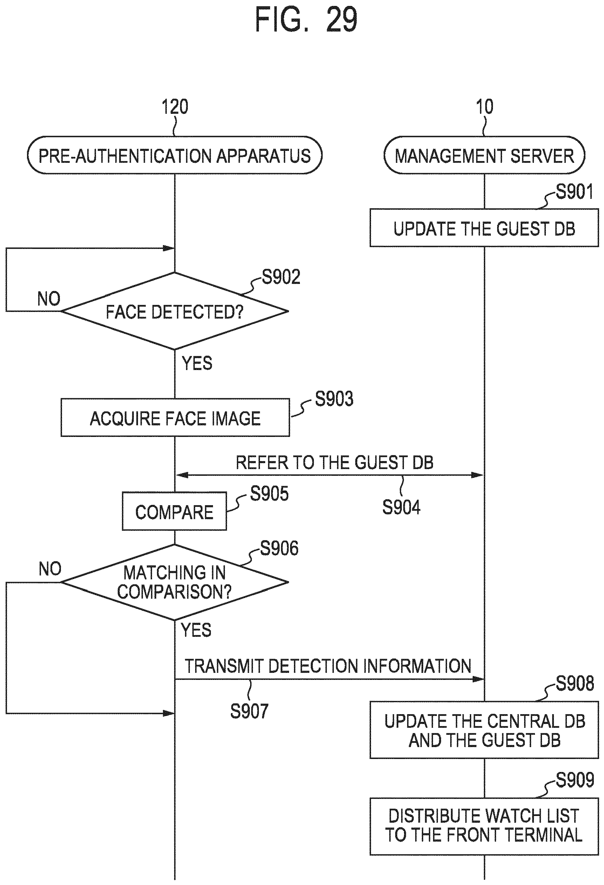

FIG. 29 is a sequence chart illustrating an example of processing by the pre-authentication device 120 and the management server 10.

First, the management server 10 extracts a record relating to the guest of the day from the information registered in the central DB 11 at a predetermined cycle, and updates the guest DB 13 by the extracted record (step S901). The entrance passing status flag of the record newly registered in the guest DB 13 is, for example, a null value indicating unset.

On the other hand, the pre-authentication device 120 constantly or periodically photographs the vicinity of the entrance of the site of the hotel H, and determines whether the face of the passerby is detected in the captured image (step S902). The pre-authentication device 120 waits until the face of the passerby is detected in the image (step S902, NO).

Next, in response to determining that the face of the passerby has been detected (step S902, YES), the pre-authentication device 120 acquires the face image of the passerby as a target face image (step S903), and refers to the guest DB 13 (step S904). Thus, the pre-authentication device 120 compares the target face image with the registered face image stored in the guest DB 13 at 1:N (step S905).

Next, as a result of the comparison, if the pre-authentication device 120 determines that there is a matching in the comparison (step S906, YES), the pre-authentication device 120 transmits the detection information of the person (accommodation reservation person) registered in the guest DB 13 to the management server 10 (step S907).

Next, upon receiving the detection information of the accommodation reservation person from the pre-authentication device 120, the management server 10 updates the guest DB 13 and the central DB 11 based on the detection information (step S908). Specifically, the entrance passing status flag in the guest DB 13 and the central DB 11 is updated from a null value to "OFF".

Then, in conjunction with the update of the guest DB 13, the management server 10 distributes to the front terminal 130 a watch list containing biometrics information of the person whose entrance passage status flag is "OFF" (step S909).

### [Check-In Procedure]

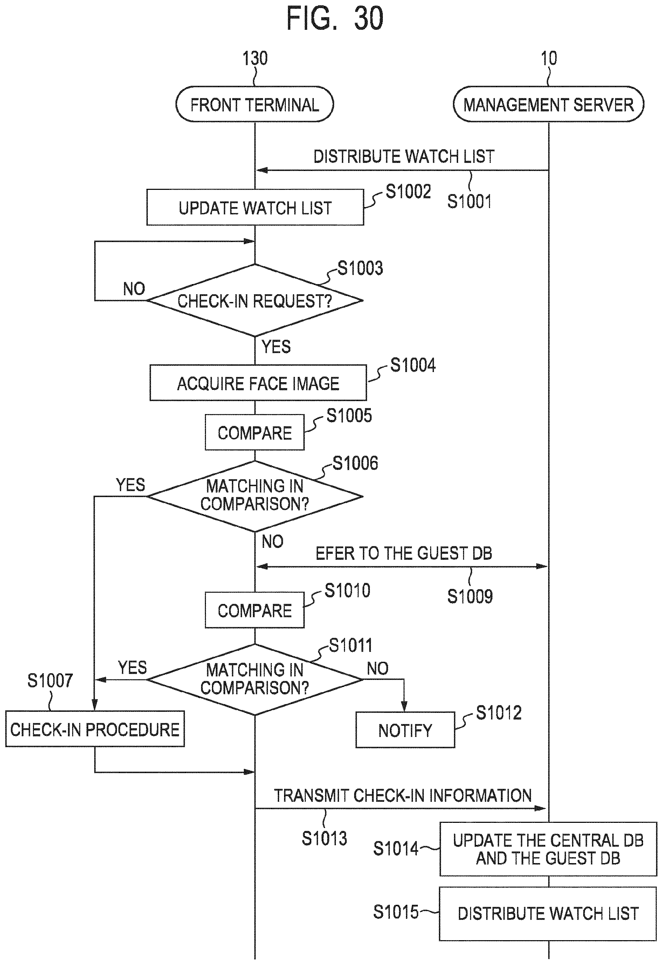

FIG. 30 is a sequence chart illustrating an example of processing by the front terminal 130 and the management server 10.

First, the management server 10 creates, from the guest information registered in the guest DB 13, a watch list of the guest reservations whose entrance passage status flag is "OFF", and distributes the watch list to the front terminal 130 (step S1001).

Next, the front terminal 130 updates the watch list stored in the storage device using the watch list received from the management server 10 (step S1002).

Next, the front terminal 130 determines whether or not a check-in request has been input by a staff at the front desk (step S1003). The front terminal 130 waits until a check-in request is input (step S1003, NO).

In response to determining that the check-in request has been input (step S1003, YES), the front terminal 130 acquires a face image of a person who performs check-in at the front desk as a target face image (step S1004) . Then, the front terminal 130 compares the target face image with the registered face images included in the watch list at 1:N (step S1005).

As a result of the comparison, if the front terminal 130 determines that there is a matching in the comparison (step S1006, YES), the front terminal 130 completes the check-in procedure (step S1007), and transmits check-in completion information of the target person to the management server 10 (step S1013).

On the other hand, as a result of the comparison, if the front terminal 130 determines that there is no matching in the comparison (step S1006, NO), the front terminal 130 refers to the guest DB 13 of the management server 10 (step S1009). Then, the front terminal 130 executes the comparison process again (step S1010). That is, when the second biometrics authentication using the watch list fails, the front terminal 130 performs the third biometrics authentication with the guest DB 13.

Next, as a result of the comparison, if the front terminal 130 determines that there is a matching in the comparison (step S1011, YES), the process proceeds to step S1007. On the other hand, as a result of the comparison, if the front terminal 130 determines that there is no matching in the comparison (step S1011, NO), the front terminal notifies the staff that the identity verification of the user U has failed (step S1012).

In response to receiving the check-in completion information from the front terminal 130, the management server 10 updates the central DB 11 and the guest DB 13 based on the check-in completion information (step S1014). Specifically, the entrance passage status flag in the guest DB 13 is updated from "OFF" to "ON". The entrance passing status flag of "ON" indicates that entry into the management area has been completed.

When the management server 10 creates the watch list according to the kind of the edge terminal, the management server 10 distributes the watch list to each edge terminal (step S1015).

### [Door Control in Guest Room

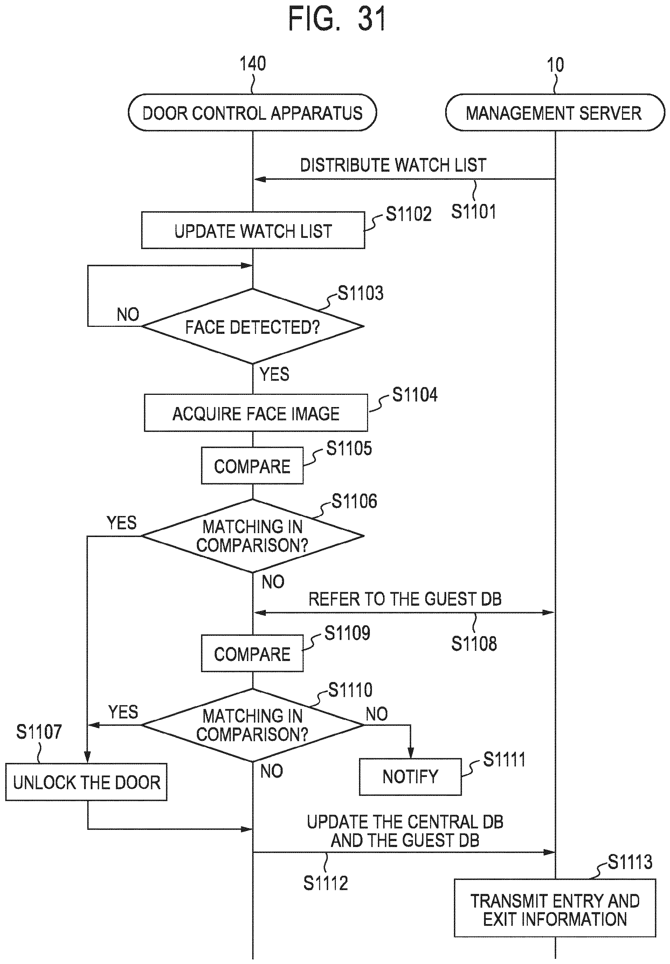

FIG. 31 is a sequence chart illustrating an example of processing by the door control apparatus 140 and the management server 10.

First, the management server 10 distributes to the door control apparatus 140 a watch list including biometrics information of the user U who stays in the guest room corresponding to the door control apparatus 140 among the guest information stored in the guest DB 13 (step S1101). The timing at which the management server 10 distributes the watch list to the door control apparatus 140 can be set arbitrarily. For example, the management server 10 may extract all the persons whose entrance passage status flag is "ON" in a fixed cycle from the guest DB 13 and distribute them to the POS terminal 50. Further, the watch list including the person may be distributed when the entrance passage status flag for the person becomes "ON".

Next, the door control apparatus 140 updates the watch list stored in the storage device using the watch list received from the management server 10 (step S1102).

Next, when the door control apparatus 140 is requested by the user U to perform an unlocking process for entering the room, the door control apparatus 140 determines whether or not the face of the user U is detected in the image taken by the camera (step S1103). The door control apparatus 140 waits until the face of the user U is detected in the image (step S1103, NO).

Next, when the door control apparatus 140 determines that the face of the user U is detected (step S1103, YES), the door control apparatus 140 acquires the face image of the user U as a target face image (step S1104), and compares the target face image of the user U with the registered face image registered in the watch list (step S1105). For example, when a plurality of persons stay in the same guest room, the captured target face image and the plurality of registered face images are compared.

Next, as a result of the comparison, if the door control apparatus determines that there is a matching in the comparison (step S1106, YES), the door control apparatus 140 executes the requested unlocking process of the door (step S1107). Thus, the user U can enter the guest room.

On the other hand, as a result of the comparison, if the door control apparatus 140 determines that there is no matching in the comparison (step S1106, NO), the process proceeds to step S1108.

In step S1108, the door control apparatus 140 refers to the guest DB 13 (or the central DB 11) of the management server 10. Then, the door control apparatus 140 executes the comparison process again (step S1109). That is, when the second biometrics authentication using the watch list fails, the door control apparatus 140 performs the third biometrics authentication with the guest DB 13 (or the central DB 11).

As a result of the comparison, if the door control apparatus 140 determines that there is a matching in the comparison (step S1110, YES), the process proceeds to step S1107. On the other hand, as a result of the comparison, if the door control apparatus 140 determines that there is no matching in the comparison (step S1110, NO), the process proceeds to step S1111.

In step S1111, the door control apparatus 140 notifies the user U that the identity verification has failed. In this case, the door control apparatus 140 causes the display device to display a notification screen notifying that the identity verification has failed. For example, a message such as "We are unable to verify your authentication information. Please contact the front desk for assistance." or "Our staff will come. Please wait a moment." may be displayed. Further, when the authentication by the door control apparatus 140 fails and the authentication with the guest DB 13 (or the central DB 11) succeeds, a message indicating the possibility that the user U is in the wrong room may be displayed. In this case, a specific room number may be notified, or the user U may be prompted to reconfirm the room number. Furthermore, when authentication fails with the guest DB 13 (or the central DB 11), a message prompting the user U to execute the check-in procedure may be displayed.

In step S1112, the door control apparatus 140 transmits the entry/exit information to the management server 10 in association with the unlocking of the door.

In response to receiving the entry/exit information from the door control apparatus 140, the management server 10 updates the central DB 11 and the guest DB 13 based on the entry/exit information (step S1113). Specifically, the room entry status in the guest DB 13 is updated from "OFF (exit)" to "ON (entry)".

As described above, according to the biometrics authentication system 3 in the present example embodiment, even when the management area is set in an open space instead of a closed space in which entry is restricted by the traffic control device, transactions related to settlement and use of services using biometrics authentication can be carried out in the management area in the same manner as in the example embodiment described above.

### [Fourth Example Embodiment]

A biometrics authentication system in a third example embodiment will be described below. Note that references common to the references provided in the drawings in the first example embodiment indicate the same components. The description of features common to those of the first example embodiment will be omitted, and different features will be described in detail.

In the first example embodiment described above, edge terminals such as the POS terminal 50 performs comparison process with the captured face image using the watch list distributed from the management server 10 as a matching destination. On the other hand, the present example embodiment is different from the first example embodiment so that the management server 10 acquires the face image captured by the edge terminal and executes the comparison process with the passenger DB 12 (or the central DB 11) set as the matching destination. Therefore, the management server 10 in the present example embodiment does not distribute the watch list to the edge terminal. Instead, the management server 10 restricts the number of persons at the matching destination according to the entrance passage status flag (or status) of the user U stored in the passenger DB 12 (or the central DB 11).

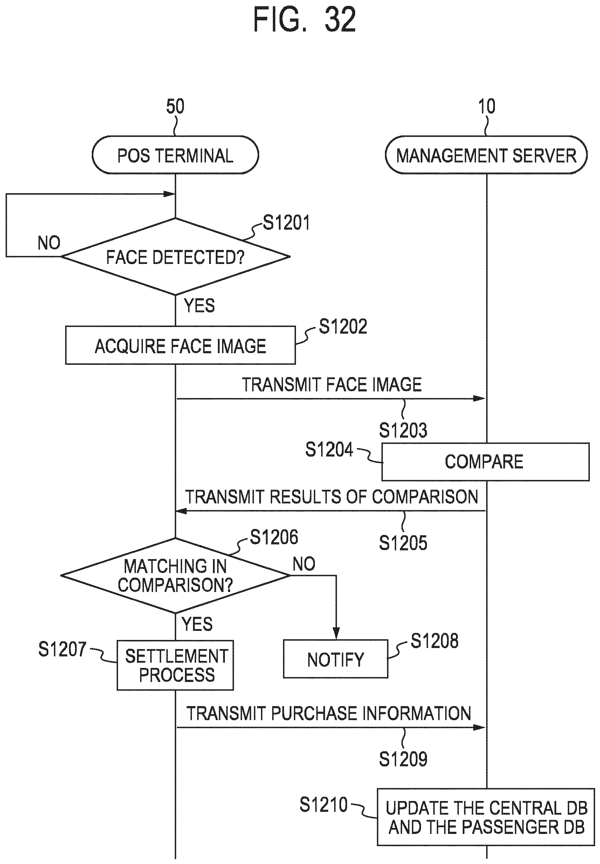

The processing between the edge terminal and the management server 10 in the present example embodiment will be described below with the POS terminal 50 as an example. FIG. 32 is a sequence chart illustrating an example of processing by the POS terminal and the management server in the present example embodiment.

When the POS terminal 50 is requested to execute the settlement process by the user U , the POS terminal 50 determines whether or not the face of the user U is detected in the image captured by the biometrics information acquisition device 509 (step S1201). The POS terminal 50 waits until the face of the user U is detected in the image (step S1201, NO).

Next, when the POS terminal 50 determines that the face of the user U is detected (step S1201, YES), the POS terminal 50 acquires the face image of the user U as a target face image (step S1202). Then, the POS terminal 50 transmits the target face image of the user U to the management server 10 (step S1203).

When receiving the face image from the POS terminal 50, the management server 10 performs matching at 1:N using the visitor registration information stored in the passenger DB 12 as the matching destination (step S1204) . At this time, for example, the management server 10 narrows the visitor information of the matching destination to a person who satisfies the following conditions (A) and (B). When matching with the passenger DB 12 fails, it is preferable to perform matching with the central DB 11.
(A)The entrance passing status flag in the passenger DB 12 is "ON" (or the status in the central DB 11 is "3" that indicates completion of the immigration procedure). That is, he/she is a person who has entered the management area A.
(B)Settlement information such as credit card information is associated with the registered face image. That is, the user is associated as a person who can execute a settlement service (transaction) by face authentication.

Next, the management server 10 transmits the matching result to the POS terminal 50 (step S1205). It is preferable that the management server 10 preferably transmits the acquisition information (User U's settlement information, passport number, airline ticket information, etc.) from the passenger DB 12 along with the matching result.

As a result of the comparison in the management server 10, if the POS terminal 50 determines that there is a matching in the comparison (step S1206, YES), the POS terminal 50 executes the settlement process requested by the user U (step S1207). Thus, the POS terminal 50 can complete the settlement process without using a medium such as cash or a credit card.

On the other hand, as a result of the comparison in the management server 10, if the POS terminal 50 determines that there is no matching in the comparison (step S1206, NO), the POS terminal 50 notifies an error message (step S1208).

Next, when the settlement process of the user U is completed, the POS terminal 50 transmits the passenger ID and the purchased article information to the management server 10 (step S1209). In this case, regarding the article to be delivered later, it is preferable that the POS terminal 50 transmits the delivery information together.

When the management server 10 receives the passenger ID and the purchased article information from the POS terminal 50, the management server 10 updates the purchased article information in the central DB 11 and the passenger DB 12 (step S1210). When an article that needs to be delivered is purchased, the delivery information is registered in the central DB 11 and the passenger DB 12 and used for the delivery service of the article.

As described above, according to the present example embodiment, since the management server 10 executes the comparison process, there is an advantage that the watch list need not be distributed to the edge terminals such as the POS terminal 50.

### [Fifth Example Embodiment]

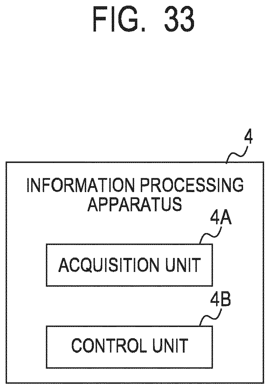

FIG. 33 is a block diagram illustrating a function of the information processing apparatus 4 in the present example embodiment. The information processing apparatus 4 includes an acquisition unit 4A and a control unit 4B. The acquisition unit 4A acquires visitor registration information of a person permitted to enter a management area by a first biometrics authentication. The control unit 4B performs a second biometrics authentication for a predetermined transaction in the management area using the visitor registration information. The information processing apparatus 4 in the present example embodiment can improve user convenience.

### [Sixth Example Embodiment]

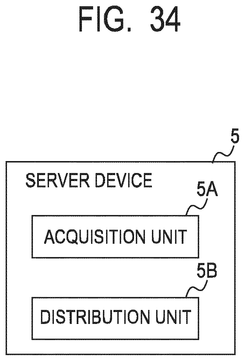

FIG. 34 is a block diagram illustrating a function of the server device 5 in the present example embodiment. The server device 5 includes an acquisition unit 5A and a distribution unit 5B. The acquisition unit 5A acquires visitor registration information from a database for recording the visitor registration information of persons permitted to enter a management area by a first biometrics authentication. The distribution unit 5B distributes the visitor registration information to an information processing apparatus for performing a second biometrics authentication for a predetermined transaction in the management area by using the visitor registration information.

The server device 5 in the present example embodiment can improve user convenience.

### [Modified Example Embodiments]

Although the disclosure has been described above with reference to the example embodiments, the disclosure is not limited to the example embodiments described above. Various modifications that may be understood by those skilled in the art can be made to the configuration and details of the disclosure within the scope not departing from the spirit of the disclosure. For example, it should be understood that an example embodiment in which a part of the configuration of any of the example embodiments is added to another example embodiment or an example embodiment in which a part of the configuration of any of the example embodiments is replaced with a part of another example embodiment is also one of the example embodiments to which the disclosure may be applied.

In the above-mentioned first example embodiment, the management area is an airport facility, but it can be similarly applied to various closed spaces such as a stadium, a theme park, an event venue, a museum, a cruise ship, etc. For example, when a spectator ticket at a stadium such as a baseball game or a soccer game is purchased, the face image and settlement information of the user are previously registered in the central DB 11, and an intermediate database such as a passenger DB 12, or a watch list can be created based on the user information for the spectator day. Thus, the settlement process by face authentication and use of various services can be performed in a management area such as a stadium.

Further, in the above-mentioned second example embodiment, the case where the passenger information registered in the first country is used in the airport facilities of a country (second country) different from the country of departure (first country) is explained, however, the same effect can be achieved by retaining face information (biometrics information) until the return to the country. That is, not only at the time of departure but also at the time of return, various procedures related to the settlement process, use of services, and entry can be performed by face authentication.

Further, in the above-described example embodiment, an example in which the authentication error is performed by the screen display has been described, but it is also possible to notify the user U that the identity verification has failed, for example, by voice, together with the display of the notification screen or in place of the display of the notification screen.

Further, the selection of the information to be extracted from the passenger DB 12 as the watch list can be narrowed down based on not only the content of the transaction but also the transactable time zone and the position of the user U in the management area.

For example, the management server 10 may create a watch list from information relating to a person present within a predetermined distance from the installation position of the edge terminal for performing the second biometrics authentication based on the position of the user U in the management area, and distribute the watch list to each edge terminal. For example, the position information of the user U in the management area can be acquired by using the function of an electronic device such as a smartphone carried by the user U. That is, before entering the management area, the management server 10 may be set so as to be able to acquire the position information of the smartphone, and the distribution destination and data contents of the watch list may be changed based on the position information and the position relationship with respect to the edge terminal. Thus, since the number N of data of the watch list stored in the edge terminal can be narrowed down, there is an advantage that the processing speed in the 1:N authentication can be further improved.

Further, the management server 10 may acquire the visitor registration information of the person who is permitted to enter and leave the restricted area set in the management area from the database for each time zone and distribute the information to the edge terminal, whereby the edge terminal may control the entry and exit in the restricted area. The restricted areas include VIP rooms in such as cruise ships and stadiums, and hotel rooms. In these cases as well, since the number N of data of the watch list stored in the edge terminal can be narrowed down, there is an advantage that the processing speed in the 1:N authentication can be further improved.

Further, in the above-described example embodiment, the watch list is created and distributed by using a temporary database (the passenger DB 12 and the guest DB 13) for storing the visitor registration information extracted from the central DB 11 based on conditions such as date and time. However, considering the amount of data stored in the central DB 11, it is possible to omit the temporary database. For example, if the number (data amount) of guest reservations stored in the central DB 11 is not large, the guest DB 13 can be omitted. In this case, the edge terminal may refer to the watch list distributed based on the information in the central DB 11. The edge terminal may directly transmit and receive data to and from the central DB 11.

Further, in the first example embodiment described above, during the period from the check-in procedure to the boarding procedure, the processes of the check-in terminal 20, the security inspection apparatus 30, the automated gate apparatus 40, the POS terminal 50, the reception terminal 60, and the boarding gate apparatus 70 with respect to the management server were described. However, the apparatus for performing the procedure based on the face authentication is not limited thereto. For example, it can be applied to automatic baggage deposit machines installed at baggage counters in airports. The automatic baggage deposit machine is a device for checking baggage which the user U does not carry into the aircraft by operating by himself. In this case, the baggage information may be registered in the central DB 11 and the passenger DB 12 in a state associated with the face image of the user U who has checked the baggage. Thus, after the check-in procedure and before the security inspection procedure, the user U can perform the procedure of checking the baggage by face authentication in the automatic baggage deposit machine. The matching destination of the face image captured by the automatic baggage deposit machine may be a registered face image stored in the central DB 11 or the passenger DB 12, or a face image of a watch list distributed from the management server 10 to the automatic baggage deposit machine upon completion of the check-in procedure.

Further, the scope of the example embodiments also includes a processing method that stores, in a storage medium, a program that causes the configuration of each of the example embodiments to operate so as to implement the function of each of the example embodiments described above, reads the program stored in the storage medium as a code, and executes the program in a computer. That is, the scope of each of the example embodiments also includes a computer readable storage medium. Further, each of the example embodiments includes not only the storage medium in which the program described above is stored but also the program itself.

As the storage medium, for example, a floppy (registered trademark) disk, a hard disk, an optical disk, a magneto-optical disk, a CD-ROM, a magnetic tape, a nonvolatile memory card, or the like can be used. Further, the scope of each of the example embodiments includes an example that operates on OS to perform a process in cooperation with another software or a function of an add-in board without being limited to an example that performs a process by an individual program stored in the storage medium.

The whole or part of the example embodiments disclosed above can be described as, but not limited to, the following supplementary notes.

### (Supplementary Note 1)

An information processing apparatus comprising:
an acquisition unit for acquiring visitor registration information of a person permitted to enter a management area by a first biometrics authentication; and
a control unit for performing a second biometrics authentication for a predetermined transaction in the management area using the visitor registration information.

### (Supplementary Note 2)

The information processing apparatus according to supplementary note 1,
wherein the acquisition unit acquires the visitor registration information of the person satisfying a predetermined condition from a database for recording the visitor registration information of the person permitted to enter the management area.

### (Supplementary Note 3)

The information processing apparatus according to supplementary note 2,
wherein the acquisition unit acquires the visitor registration information of the person associated with the transaction from the database.

### (Supplementary Note 4)

The information processing apparatus according to supplementary note 2 or 3,
wherein the acquisition unit acquires from the database the visitor registration information of the person who can use the transaction in a predetermined time zone.

### (Supplementary Note 5)

The information processing apparatus according to any one of supplementary notes 2 to 4,
wherein the acquisition unit acquires the visitor registration information of the person existing within a predetermined distance from the execution place of the second biometrics authentication from the database.

### (Supplementary Note 6)

The information processing apparatus according to supplementary note 5,
wherein the acquisition unit acquires the visitor registration information from the database based on the position information in the management area acquired from the portable terminal carried by the person.

### (Supplementary Note 7)

The information processing apparatus according to any one of supplementary notes 2 to 6,
wherein, when the second biometrics authentication fails, the control unit executes third biometrics authentication of the biometrics information of the person used in the second biometrics authentication and the plurality of pieces of the visitor registration information stored in the database.

### (Supplementary Note 8)

The information processing apparatus according to supplementary notes 7,
wherein the control unit outputs notification information based on the results of the second biometrics authentication and the third biometrics authentication.

### (Supplementary Note 9)

The information processing apparatus according to supplementary note 3,
wherein the acquisition unit acquires the visitor registration information of the person associated with settlement information from the database, and
wherein the control unit executes the transaction including settlement process of the article and/or the service based on the settlement information.

### (Supplementary Note 10)

The information processing apparatus according to supplementary note 3,
wherein the acquisition unit acquires the visitor registration information of the person associated with a predetermined service from the database, and
wherein the control unit executes the transaction for providing the service.

### (Supplementary Note 11)

The information processing apparatus according to supplementary note 10,
wherein the services are delivery services of duty-free goods at facilities installed in the management area of an airport, and
wherein the acquisition unit acquires the visitor registration information of the person associated with the delivery service from the database.

### (Supplementary Note 12)

The information processing apparatus according to supplementary note 4,
wherein the acquisition unit acquires the entry registration information of the person who is permitted to board the aircraft from the database based on the scheduled departure time and the current time of the aircraft associated with the boarding gate provided in the management area of the airport, and
wherein the control unit controls passage of the person at the boarding gate.

### (Supplementary Note 13)

The information processing apparatus according to supplementary note 4,
wherein the acquisition unit acquires the visitor registration information of the person on board the aircraft from the database based on the estimated arrival time and the current time of the aircraft at the airport, and
wherein the control unit controls passage of the person at a customs gate provided in the management area of the airport.

### (Supplementary Note 14)

The information processing apparatus according to supplementary note 4,
wherein the acquisition unit acquires the visitor registration information of the person who is permitted to enter and leave a restricted area set in the management area from the database for each time period, and
wherein the control unit controls entry and exit in the restricted area.

### (Supplementary Note 15)

The information processing apparatus according to any one of supplementary notes 1 to 14,
wherein the control unit deletes the visitor registration information of the person who has left the management area.

### (Supplementary Note 16)

The information processing apparatus according to any one of supplementary notes 1 to 15,
wherein the acquisition unit acquires the visitor registration information upon the success of the first biometrics authentication.

### (Supplementary Note 17)

A server device comprising:
an acquisition unit for acquiring visitor registration information of a person permitted to enter a management area by a first biometrics authentication; and
a distribution unit for distributing the visitor registration information to an information processing apparatus for performing a second biometrics authentication for a predetermined transaction in the management area by using the visitor registration information.

### (Supplementary Note 18)

The server device according to supplementary note 17,
wherein the acquisition unit acquires the visitor registration information of the person associated with the transaction.

### (Supplementary Note 19)

The server device according to supplementary note 17 or 18,
wherein the acquisition unit acquires the visitor registration information of the person who can use the transaction in a predetermined time zone.

### (Supplementary Note 20)

The server device according to any one of supplementary notes 17 to 19,
wherein the acquisition unit acquires the visitor registration information of the person existing within a predetermined distance from the location of the information processing apparatus.

### (Supplementary Note 21)

The server device according to any one of supplementary notes 17 to 20,
wherein the distribution unit distributes the visitor registration information to the information processing apparatus upon the success of the first biometrics authentication.

### (Supplementary Note 22)

An information processing method comprising:
acquiring visitor registration information of a person permitted to enter a management area by a first biometrics authentication; and
performing a second biometrics authentication for a predetermined transaction in the management area using the visitor registration information.

### (Supplementary Note 23)

A storage medium storing a program that causes a computer to perform:
acquiring visitor registration information of a person permitted to enter a management area by a first biometrics authentication; and
performing a second biometrics authentication for a predetermined transaction in the management area using the visitor registration information.

### [Reference Signs List]

NW Network
AP1, AP2 Airport
1,2,3 Biometrics Authentication System
4 Information Processing Apparatus
4A Acquisition unit
4B Control unit
5 Server Device
5A Acquisition unit
5B Distribution unit
10 Management Server
11 Central DB
12 Passenger DB
13 Hotel DB
20 Check-in Terminal
30 Security Inspection Apparatus
40 Automated Gate Apparatus
50 POS Terminal
60 Reception Terminal
70 Boarding Gate Apparatus
80 Monitoring Camera
90 Automatic Customs Gate
110 User Terminal
120 Pre-authentication Device
130 Front Terminal
140 Door Control Device
101,201,301,401,501,601,701 CPU
102,202,302,402,502,602,702 RAM
103,203,303,403,503,603,703 Storage
104,204,304,404,504,604,704 Communication I/F
105,205,305,405,505,605,705 Bus Line
206,306,406,506,606,706 Input Device
207,307,407,507,607,707 Display Device
208 Medium Reading Device
209,309,409,509,609,709 Biometrics Information Acquisition Device
310 Metal Detector Gate
411,711 Gate
512 Automatic Change Paying Machine
513 Printer
614 Peripheral Device

## Claims

1. An information processing apparatus comprising:
an acquisition unit for acquiring visitor registration information of a person permitted to enter a management area by a first biometrics authentication; and
a control unit for performing a second biometrics authentication for a predetermined transaction in the management area using the visitor registration information.

2. The information processing apparatus according to claim 1,
wherein the acquisition unit acquires the visitor registration information of the person satisfying a predetermined condition from a database for recording the visitor registration information of the person permitted to enter the management area.

3. The information processing apparatus according to claim 2,
wherein the acquisition unit acquires the visitor registration information of the person associated with the transaction from the database.

4. The information processing apparatus according to claim 2 or 3,
wherein the acquisition unit acquires from the database the visitor registration information of the person who can use the transaction in a predetermined time zone.

5. The information processing apparatus according to any one of claims 2 to 4,
wherein the acquisition unit acquires the visitor registration information of the person existing within a predetermined distance from the execution place of the second biometrics authentication from the database.

6. The information processing apparatus according to claim 5,
wherein the acquisition unit acquires the visitor registration information from the database based on the position information in the management area acquired from the portable terminal carried by the person.

7. The information processing apparatus according to any one of claims 2 to 6,
wherein, when the second biometrics authentication fails, the control unit executes third biometrics authentication of the biometrics information of the person used in the second biometrics authentication and the plurality of pieces of the visitor registration information stored in the database.

8. The information processing apparatus according to claim 7,
wherein the control unit outputs notification information based on the results of the second biometrics authentication and the third biometrics authentication.

9. The information processing apparatus according to claim 3,
wherein the acquisition unit acquires the visitor registration information of the person associated with settlement information from the database, and
wherein the control unit executes the transaction including settlement process of the article and/or the service based on the settlement information.

10. The information processing apparatus according to claim 3,
wherein the acquisition unit acquires the visitor registration information of the person associated with a predetermined service from the database, and
wherein the control unit executes the transaction for providing the service.

11. The information processing apparatus according to claim 10,
wherein the services are delivery services of duty-free goods at facilities installed in the management area of an airport, and
wherein the acquisition unit acquires the visitor registration information of the person associated with the delivery service from the database.

12. The information processing apparatus according to claim 4,
wherein the acquisition unit acquires the entry registration information of the person who is permitted to board the aircraft from the database based on the scheduled departure time and the current time of the aircraft associated with the boarding gate provided in the management area of the airport, and
wherein the control unit controls passage of the person at the boarding gate.

13. The information processing apparatus according to claim 4,
wherein the acquisition unit acquires the visitor registration information of the person on board the aircraft from the database based on the estimated arrival time and the current time of the aircraft at the airport, and
wherein the control unit controls passage of the person at a customs gate provided in the management area of the airport.

14. The information processing apparatus according to claim 4,
wherein the acquisition unit acquires the visitor registration information of the person who is permitted to enter and leave a restricted area set in the management area from the database for each time period, and
wherein the control unit controls entry and exit in the restricted area.

15. The information processing apparatus according to any one of claims 1 to 14,
wherein the control unit deletes the visitor registration information of the person who has left the management area.

16. The information processing apparatus according to any one of claims 1 to 15,
wherein the acquisition unit acquires the visitor registration information upon the success of the first biometrics authentication.

17. A server device comprising:
an acquisition unit for acquiring visitor registration information of a person permitted to enter a management area by a first biometrics authentication; and
a distribution unit for distributing the visitor registration information to an information processing apparatus for performing a second biometrics authentication for a predetermined transaction in the management area by using the visitor registration information.

18. The server device according to claim 17,
wherein the acquisition unit acquires the visitor registration information of the person associated with the transaction.

19. The server device according to claim 17 or 18, wherein the acquisition unit acquires the visitor registration information of the person who can use the transaction in a predetermined time zone.

20. The server device according to any one of claims 17 to 19,
wherein the acquisition unit acquires the visitor registration information of the person existing within a predetermined distance from the location of the information processing apparatus.

21. The server device according to any one of claims 17 to 20,
wherein the distribution unit distributes the visitor registration information to the information processing apparatus upon the success of the first biometrics authentication.

22. An information processing method comprising:
acquiring visitor registration information of a person permitted to enter a management area by a first biometrics authentication; and
performing a second biometrics authentication for a predetermined transaction in the management area using the visitor registration information.

23. A storage medium storing a program that causes a computer to perform:
acquiring visitor registration information of a person permitted to enter a management area by a first biometrics authentication; and
performing a second biometrics authentication for a predetermined transaction in the management area using the visitor registration information.
